# EUROPEAN PATENT APPLICATION

(11) **EP 4 753 354 A1**
(43) Date of publication of application: **03.06.2026**
(21) Application number: 24858333.8
(22) Date of filing: 15.08.2024
(51) Int. Cl.: H04W 72/542

(54) **COMMUNICATION METHOD AND APPARATUS**

(30) Priority: 25.08.2023 CN 202311094566
(71) Applicant: HUAWEI TECHNOLOGIES CO., LTD., Shenzhen 518129 (CN)
(72) Inventor: JIA, Jianxin, Shenzhen, Guangdong 518129 (CN); LI, Guanglei, Shenzhen, Guangdong 518129 (CN); ZHOU, Han, Shenzhen, Guangdong 518129 (CN); WU, Wenfu, Shenzhen, Guangdong 518129 (CN); JIANG, Chuankui, Shenzhen, Guangdong 518129 (CN); ZONG, Zaifeng, Shenzhen, Guangdong 518129 (CN); ZHANG, Xuefei, Shenzhen, Guangdong 518129 (CN)
(74) Representative: Pfenning, Meinig & Partner mbB
(86) International application number: PCT/CN2024/112513
(87) International publication number: WO 2025/044790

(57) **Abstract**

Embodiments of this application provide a communication method and apparatus, and relate to the field of communication technologies. A sensing network element obtains sensing information of a user, where the sensing information of the user includes location information of the user, and the sensing information of the user is for determining an associated user of a first target. The sensing network element receives a first message, where the first message is for requesting associated user information of the first target. The sensing network element obtains sensing data, and obtains sensing information of the first target based on the sensing data, where the sensing information of the first target includes location information of the first target. The sensing network element sends the sensing information of the first target and the sensing information of the user. **In** this manner, user information corresponding to a sensing target may be determined, to help a regulatory authority determine a relevant person in charge of the sensing target.

## Description

### CROSS-REFERENCE TO RELATED APPLICATIONS

This application claims priority to Chinese Patent Application No. 202311094566.0, filed with the China National Intellectual Property Administration on August 25, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With communication development and progress, smart transportation, smart low-altitude, smart home, smart city, smart factory, and the like develop rapidly, and life of people becomes more convenient. However, in some application scenarios, there are still some problems that are difficult to resolve. For example, in the autonomous driving field, user information to which a vehicle with an abnormal trajectory belongs cannot be known; and in the uncrewed-aerial-vehicle flight field, an owner or operator of an unregistered uncrewed aerial vehicle cannot be determined. Therefore, it can be learned that an owner or operator of a target object cannot be determined.

### SUMMARY

This application provides a communication method and apparatus, to determine a person in charge of a target object, to facilitate supervision by a regulatory authority.

According to a first aspect, this application provides a communication method. The method may be performed by a sensing network element. The sensing network element is mainly configured to perform data processing, for example, clustering, tracking filtering, trajectory tracking, target recognition, and environment reconstruction, on sensing data uploaded by an access network device. The sensing network element may be a sensing function (sensing function, SF). The method is performed as follows:

The sensing network element obtains sensing information of a user, where the sensing information of the user includes location information of the user. The sensing network element receives a first message, where the first message is for requesting associated user information of a first target. The sensing network element obtains sensing data, and obtains sensing information of the first target based on the sensing data, where the sensing information of the first target includes location information of the first target. The sensing network element sends the sensing information of the first target and the sensing information of the user.

It should be noted that "obtains" in "obtains sensing information of the first target based on the sensing data" may be replaced with "determines". In addition, "the sensing network element sends the sensing information of the first target and the sensing information of the user" does not merely mean that the sensing information of the first target and the sensing information of the user are simultaneously sent to a same receiver, but may also mean that the sensing information of the first target and the sensing information of the user are sent to different receivers in different messages. For example, the sensing network element sends the sensing information of the first target to a sensing requester, and sends the sensing information of the user to a network data analytics function or an access and mobility management network element. In addition, the sensing requester may be replaced with an application function (application function, AF), a third party, a sensing third-party, a sensing application, or the like. This is not limited. In addition, for the first message, "is for requesting" may also be understood as "is for subscribing to", "is for obtaining", or the like. This is not specifically limited herein in this application. The "sensing information" may be replaced with a "sensing context", a "user stereoscopic context", a "sensing stereoscopic context", or the like. The sensing information is not specifically limited in this application.

In this application, the sensing network element determines the associated user information of the first target based on the sensing data. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

In an optional manner, the sensing network element sends the sensing information of the first target to a sensing requester.

In an optional manner, the sensing network element sends the sensing information of the user to a network data analytics function; or the sensing network element sends the sensing information of the user to an access and mobility management network element.

In an optional manner, the sensing network element receives a second message from the sensing requester, where the second message is for requesting the location information of the first target, or is for obtaining a notification for the first target. The sensing network element sends a response message for the second message to the sensing requester.

It should be noted that "requesting" may be replaced with "subscribing to", "obtaining", or the like. This is not specifically limited herein.

In an optional manner, the sensing network element receives a third message from the access and mobility management network element, where the third message is for triggering the sensing network element to obtain sensing information of a first user, and the third message includes an identifier of the first user and a first area of the first user. The sensing network element obtains the sensing information of the first user. The sensing network element sends the sensing information of the first user to the network data analytics function.

It should be noted that, "the third message includes an identifier of the first user and a first area of the first user" may be understood as: The third message includes only the identifier of the first user or includes only the first area of the first user; or the third message includes both the identifier of the first user and the first area of the first user.

The triggering in this application may be understood as requesting/indicating/notifying/triggering, and the obtaining the sensing information of the first user in this application may be replaced with generating/producing/determining/establishing/creating the sensing information of the first user.

It should be noted that the first area in this specification may include a cell identity (cell ID), a base station/access network identity, a tracking area identity/tracking area code (tracking area ID/tracking area code, TAI/TAC), a public land mobile network identity (public land mobile network identity, PLMN ID), a service area identity (service area identity, SAI), a central unit identity (central unit identity, CU ID), a distributed unit identity (distributed unit identity, DU ID), a transmission reception point identity (transmission reception point identity, TRP ID), or the like. This is merely an example for description herein, and is not specifically limited in this application.

In an optional manner, the sensing network element receives a fourth message from the access and mobility management network element, where the fourth message is for requesting to obtain sensing information of a user in a first area, and the fourth message includes the first area in which a first user is located. The sensing network element obtains the sensing information of the user in the first area. The sensing network element sends the sensing information of the user in the first area to the access and mobility management network element.

In an optional manner, the sensing information of the user further includes one or more of the following: an appearance of the user, a gait of the user, a contour of the user, a speed of the user, a distance of the user, an angle of the user, a direction of the user, time of the user, sensing information of an object associated with the user, and biological information of the user.

It should be noted that the contour of the user/a form of the user may be understood as recognition information or appearance recognition information of the user, or appearance information of the user, and is an expression form of long-distance biological information. The sensing information of the object associated with the user may be understood as sensing information of an object related to the user, a target or target object related to the user, an object corresponding to the user, or a target or target object corresponding to the user, and may also be interpreted as sensing information of a target or target object that is taken/carried/held/remotely controlled by the user or that is away from the user for a specific range. The biological information of the user may include facial recognition information of the user, a fingerprint of the user, a skin color of the user, or the like. Gait information of the user may be understood as a walking posture of the user. Gait recognition is to perform analysis processing on an image sequence including human body motions, where the analysis processing generally includes three processes, namely, gait detection, gait representation, and the gait recognition, and the like.

In an optional manner, the sensing information of the first target further includes one or more of the following: an appearance of the first target, a detection area associated with the first target, trajectory information of the first target, and time information of the first target.

It should be noted that the appearance of the first target may be appearance recognition information of the first target. For example, the first target is an uncrewed aerial vehicle, a vehicle, a flying bird, or a stone. The trajectory information of the first target may be understood as the location information of the first target. For example, the trajectory information includes a string of location information. The time information of the first target may be understood as information about a moment at which the first target appears or information about a moment at which the first target is detected.

In an optional manner, the sensing network element sends a fifth message, where the fifth message is for requesting to obtain the associated user information of the first target, and the fifth message includes one or more of the following: a detection area related to the first target, an identifier of the first target, moving trajectory information of the first target, and the location information of the first target.

The sensing network element receives a response message for the fifth message, where the response message for the fifth message includes the associated user information of the first target.

It should be noted that the associated user information of the first target may be interpreted as user information corresponding to the first target/user information related to the first target, and may indicate that these users are highly possibly users, responsible persons, or persons in charge of the target. The detection area related to the first target may be interpreted as an area including a location of the first target, for example, an area centered on the location of the first target or an area including the location of the first target. The area may be an area represented by a geographic coordinate, or may be an area represented by a cell identity, a base station identity, a tracking area identity, and/or a PLMN identity.

In an optional manner, the sensing network element determines the associated user information of the first target.

In an optional manner, the sensing network element determines a quantity of occurrences of a user in the detection area. The sensing network element deletes, from a user associated with the first target, a user whose quantity of occurrences is less than or equal to a first parameter, to obtain a second user.

It should be noted that the detection area may be the foregoing detection area related to the first target, and the first parameter may be an integer or a character-type value.

According to a second aspect, this application provides a communication method. The method may be performed by a network data analytics function. The network data analytics function is mainly configured to perform calculation processing and the like, such as statistics collection, analysis, and artificial intelligence (artificial intelligence, AI) calculation, on data. The network data analytics function may be a network data analytics function (network data analytics function, NWDAF). The method is performed as follows:

The network data analytics function receives sensing information of a first target from a sensing network element, where the sensing information of the first target includes location information of the first target. The network data analytics function determines associated user information of the first target based on the sensing information of the first target, where the associated user information of the first target includes location information of a user and an identifier of the user.

It should be noted that "determines" may be replaced with "produces/generates/obtains". In this application, the network data analytics function analyzes the sensing information of the first target to determine the associated user information of the first target. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

In an optional manner, the network data analytics function receives a first message from a sensing requester, where the first message is for requesting the associated user information of the first target. The network data analytics function requests to obtain sensing information of a user from the sensing network element, where the sensing information of the user includes the associated user information of the first target. The network data analytics function sends the associated user information of the first target to the sensing requester.

It should be noted that "requesting" may be replaced with "subscribing to/obtaining". The network data analytics function obtains the associated user information of the first target based on the request sent by the sensing requester, to assist the sensing requester (for example, a regulatory authority) in reducing supervision costs, and avoid resource overheads caused by the AF through large-scale screening of users associated with the first target.

In an optional manner, the network data analytics function receives a second message from the sensing requester, where the second message is for requesting the location information of the first target, or is for obtaining a notification for the first target. The network data analytics function requests to obtain the location information of the first target or the notification for the first target from the sensing network element. The network data analytics function sends the location information of the first target or the notification for the first target to the sensing requester.

The request for the location information of the first target or the obtaining of the notification for the first target from the network data analytics function is triggered based on the request of the sensing requester, to give a timely alarm for an abnormal target, to avoid a public resource loss or privacy leakage caused when the abnormal target enters an area.

In an optional manner, the sensing information of the first target further includes one or more of the following: an appearance of the first target, a detection area associated with the first target, trajectory information of the first target, and time information of the first target.

It should be noted that the trajectory information of the first target may be a moving trajectory of the first target.

In an optional manner, the sensing information of the user further includes one or more of the following: an appearance of the user, a gait of the user, a speed of the user, a contour of the user, a distance of the user, an angle of the user, a direction of the user, time of the user, sensing information of an object associated with the user, and biological information of the user.

In an optional manner, the network data analytics function sends a third message to the sensing network element, where the third message is for obtaining the sensing information of the user.

In an optional manner, the network data analytics function sends a fourth message to an access and mobility management network element, where the fourth message is for obtaining the sensing information of the user. The network data analytics function receives the sensing information of the user from the access and mobility management network element.

In an optional manner, the network data analytics function determines the associated user information of the first target based on the sensing information of the user and the sensing information of the first target, where the sensing information of the first target includes one or more of the following: the location information of the first target, the appearance of the first target, and time of the first target.

In an optional manner, the network data analytics function determines an area in which the first target is located. The network data analytics function determines, based on the location information of the user, a first user located in the area in which the first target is located.

In an optional manner, the network data analytics function determines the associated user information of the first target based on the sensing information of the first target and sensing information of the first user.

In an optional manner, the network data analytics function obtains the associated user information of the first target locally and/or non-locally.

It should be noted that "locally" may mean local storage or configuration by the NWDAF, and "non-locally" may mean obtaining by the NWDAF from another network element. For example, a user identifier corresponding to the first target is obtained from an NWDAF of another PLMN.

In an optional manner, the network data analytics function determines a quantity of occurrences of a user in the detection area. The network data analytics function deletes, from a user associated with the first target, a user whose quantity of occurrences is less than or equal to a first parameter, to obtain a second user.

It should be noted that the detection area may be the area in which the first target is located. The first parameter may be an integer or a character. This is not limited.

According to a third aspect, an embodiment of this application provides a communication method. The method may be performed by an access and mobility management network element. The access and mobility management network element is mainly configured to obtain information about a user, for example, an identifier of the user. The method is performed as follows:

The access and mobility management network element receives a registration request message of a user. The access and mobility management network element sends a first message to a sensing network element, where the first message is for triggering the sensing network element to obtain sensing information of a first user, and the first message includes an identifier of the first user and a first area of the first user.

It should be noted that the access and mobility management network element may send the first message after receiving the request message of the user, or may send the first message after receiving a registration accept message. This is not specifically limited herein in this application. That the first message includes the identifier of the first user and the first area of the first user may be: The first message includes only the identifier of the first user, the first message includes only the first area of the first user, or the first message includes both the identifier of the first user and the first area of the first user.

In an optional manner, the access and mobility management network element sends a second message to the sensing network element, where the second message is for requesting to obtain sensing information of a user in the first area, and the second message includes the first area in which the first user is located. The access and mobility management network element receives the sensing information of the user in the first area from the sensing network element.

In an optional manner, the access and mobility management network element receives a third message from a network data analytics function, where the third message is for obtaining sensing information of a user. The access and mobility management network element sends the sensing information of the user to the network data analytics function.

In an optional manner, the sensing information of the user includes one or more of the following: location information of the user, a form of the user, a gait of the user, a contour of the user, a speed of the user, a distance of the user, an angle of the user, a direction of the user, time of the user, sensing information of an object associated with the user, and biological information of the user.

In an optional manner, the access and mobility management network element receives a fourth message from the sensing network element, where the fourth message is for requesting to obtain associated user information of a first target, and the fourth message includes one or more of the following: a detection area related to the first target, an identifier of the first target, moving trajectory information of the first target, and location information of the first target. The access and mobility management network element determines the associated user information of the first target. The access and mobility management network element sends the associated user information of the first target to the sensing network element.

In an optional manner, the access and mobility management network element receives a fifth message from the sensing network element, where the fifth message is for requesting to obtain associated user information of a first target, and the fifth message includes a detection area of the first target. The access and mobility management network element determines, based on the detection area of the first target, a first access network device located in the detection area.

In an optional manner, that the access and mobility management network element determines, based on the detection area of the first target, the first access network device located in the detection area includes:

The access and mobility management network element sends a sixth message to the first access network device, where the sixth message is for requesting an identifier of a first user in the detection area. The access and mobility management network element receives the identifier of the first user from the first access network device. The access and mobility management network element determines information about the first user based on the logical identifier of the first user.

It should be noted that the sixth message is for requesting the identifier of the first user in the detection area, the detection area may be an area including a location of the first target, and the area may be a geographic area, or is an area represented by one or more of the following identities: a cell identity, an access network device identity, a tracking area identity, a PLMN ID, a TRP ID, a CU ID, a DU ID, and the like. The access and mobility management network element receives the identifier of the first user from the first access network device. The identifier may be a radio network temporary identifier (radio network temporary identifier, RNTI), an NG application protocol (next generation application protocol, NGAP) UE ID, or the like.

In addition, it should be further noted that, that the access management network element determines the information about the first user based on the logical identifier of the first user may be: The access management network element determines, based on a C-RNTI (cell-radio network temporary identifier) and/or the NGAP UE ID, a subscription permanent identifier (subscription permanent identifier, SUPI)/an international mobile subscriber identity (international mobile subscriber identity, IMSI) corresponding to the user, and further determines a context of the user, to determine the information about the first user.

According to a fourth aspect, an embodiment of this application provides a communication method. The method may be performed by a sensing requester. The sensing requester may be replaced with an AF, a third party, a sensing third-party, a sensing application, or the like. This is not limited. The method is performed as follows:

The sensing requester sends a first message, where the first message is for requesting associated user information of a first target, or the first message is for requesting a notification for a first target.

According to a fifth aspect, an embodiment of this application provides a communication method. The method may be performed by a sensing network element. The sensing network element is mainly configured to perform data processing, for example, clustering, tracking filtering, trajectory tracking, target recognition, and environment reconstruction, on sensing data uploaded by an access network device. The sensing network element may be an SF. The method is performed as follows:

The sensing network element receives a first message from an access and mobility management network element, where the first message is for triggering the sensing network element to obtain sensing information of a first user, and the first message includes an identifier of the first user and a first area of the first user. The sensing network element obtains the sensing information of the first user. The sensing network element sends the sensing information of the first user to a network data analytics function.

It should be noted that, that the first message is for triggering the sensing network element to obtain the sensing information of the first user may be interpreted as: The first message indicates/is for notifying the sensing network element to generate/establish/create/determine the sensing information of the first user. The sensing information may be interpreted as a sensing context or a stereoscopic context.

In addition, it should be further noted that, that the first message includes the identifier of the first user and the first area of the first user may be: The first message includes only the identifier of the first user, the first message includes only the first area of the first user, or the first message includes both the identifier of the first user and the first area of the first user.

According to a sixth aspect, an embodiment of this application provides a communication method. The method may be performed by a sensing network element. The sensing network element is mainly configured to perform data processing, for example, clustering, tracking filtering, trajectory tracking, target recognition, and environment reconstruction, on sensing data uploaded by an access network device. The sensing network element may be an SF. The method is performed as follows:

The sensing network element receives a first message from an access and mobility management network element, where the first message is for requesting to obtain sensing information of a user in a first area, and the first message includes the first area in which a first user is located. The sensing network element obtains the sensing information of the user in the first area. The sensing network element sends the sensing information of the user in the first area to the access and mobility management network element.

According to a seventh aspect, an embodiment of this application provides a communication method. The method may be performed by an access network device. The access network device may be a base station, an access point, or the like. The method is performed as follows:

The access network device receives a first message from an access and mobility management network element, where the first message is for requesting associated user information of a first target, and the first message includes location information of the first target and a detection area of the first target. The access network device determines the associated user information of the first target based on an uplink advance of a user and the detection area.

According to an eighth aspect, an embodiment of this application provides a communication apparatus. The communication apparatus may be the foregoing sensing network element or a chip disposed inside the sensing network element, may be the foregoing network data analytics function or a chip disposed inside the network data analytics function, may be the access and mobility management network element or a chip disposed inside the access and mobility management network element, or may be the sensing requester or a chip disposed inside the sensing requester. The communication apparatus has a function of implementing any one of the first aspect to the seventh aspect. For example, the communication apparatus includes a corresponding module, unit, or means (means) for performing the steps in any one of the first aspect to the seventh aspect. The function, unit, or means may be implemented by software, implemented by hardware, or implemented by hardware executing corresponding software.

In a possible design, the communication apparatus includes a processing unit and a transceiver unit. The transceiver unit may be configured to send and receive a signal, to implement communication between the communication apparatus and another apparatus. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the seventh aspect. The communication apparatus may further include one or more memories. The memory is configured to be coupled to the processor, and the memory may store a necessary computer program or necessary instructions for implementing the function in any one of the first aspect to the seventh aspect. The processor may execute the computer program or the instructions stored in the memory. When the computer program or the instructions are executed, the communication apparatus is enabled to implement the method in any possible design or implementation of the first aspect to the seventh aspect.

In another possible design, the communication apparatus includes a processor. The processor may be configured to be coupled to a memory. The memory may store a necessary computer program or necessary instructions for implementing the function in any one of the first aspect to the seventh aspect. The processor may execute the computer program or the instructions stored in the memory. When the computer program or the instructions are executed, the communication apparatus is enabled to implement the method in any possible design or implementation of the first aspect to the seventh aspect.

In another possible design, the communication apparatus includes a processor and an interface circuit. The processor is configured to: communicate with another apparatus through the interface circuit, and perform the method in any possible design or implementation of the first aspect to the seventh aspect.

It may be understood that, in the seventh aspect, the processor may be implemented by hardware, or may be implemented by software. When the processor is implemented by the hardware, the processor may be a logic circuit, an integrated circuit, or the like; or when the processor is implemented by the software, the processor may be a general-purpose processor, and is implemented by reading software code stored in the memory. In addition, there may be one or more processors and one or more memories. The memory may be integrated with the processor, or the memory and the processor are disposed separately. In a specific implementation process, the memory and the processor may be integrated into one chip, or may be separately disposed on different chips. A type of the memory and a manner in which the memory and the processor are disposed are not limited in embodiments of this application.

According to a ninth aspect, an embodiment of this application provides a communication system. The communication system includes the sensing network element, the network data analytics function, the access and mobility management network element, and the sensing requester in the first aspect to the seventh aspect.

According to a tenth aspect, this application provides a chip system. The chip system includes a processor, may further include a memory, and is configured to implement the method in any one of the possible designs of the first aspect to the seventh aspect. The chip system may include a chip, or may include a chip and another discrete component.

According to an eleventh aspect, this application further provides a computer-readable storage medium. The computer-readable storage medium stores computer-readable instructions. When the computer-readable instructions are run on a computer, the computer is enabled to perform the method in any one of the possible designs of the first aspect to the seventh aspect.

According to a twelfth aspect, this application provides a computer program product including instructions. When the computer program product runs on a computer, the computer is enabled to perform the method in various embodiments of the first aspect to the seventh aspect.

For technical effects that can be achieved in the second aspect to the seventh aspect, refer to descriptions of technical effects that can be achieved in corresponding possible design schemes in the first aspect. Details are not described herein again in this application.

### BRIEF DESCRIPTION OF DRAWINGS

FIG. 1A is a diagram of a communication system;
FIG. 1B is a diagram of another communication system;
FIG. 2 is a schematic flowchart of sensing processing;
FIG. 3 is a diagram of still another communication system;
FIG. 4 is a schematic flowchart of a communication method;
FIG. 5 is a schematic flowchart of a communication method;
FIG. 6 is a schematic flowchart of a communication method;
FIG. 7 is a schematic flowchart of a communication method;
FIG. 8 is a diagram of a principle of determining a user associated with an uncrewed aerial vehicle;
FIG. 9 is a schematic flowchart of a communication method;
FIG. 10 is a schematic flowchart of a communication method;
FIG. 11 is a diagram of a principle of determining a user associated with an uncrewed aerial vehicle;
FIG. 12 is a schematic flowchart of a communication method;
FIG. 13A to FIG. 13C are a schematic flowchart of a communication method;
FIG. 14 is a diagram of a principle of determining a user associated with an uncrewed aerial vehicle;
FIG. 15A to FIG. 15C are a schematic flowchart of a communication method;
FIG. 16A to FIG. 16C are a schematic flowchart of a communication method;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of another communication apparatus according to an embodiment of this application.

### DESCRIPTION OF EMBODIMENTS

To make objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more than two. Therefore, for implementation of an apparatus and a method, reference may be made to each other, and repeated parts are not described again.

To cope with challenges of wireless broadband technologies and maintain a leading advantage of a 3rd generation partnership project (3rd generation partnership project, 3GPP) network, the 3GPP standards group has formulated a next generation mobile communication network system (Next Generation System) architecture, where the architecture is referred to as a 5G network architecture. The architecture not only supports access to a 5G core network (core network, CN) by using a radio access technology (for example, a long term evolution (long term evolution, LTE) access technology or a RAN access technology) defined by the 3GPP standards group, but also supports access to the core network by using a non-3GPP (non-3GPP) access technology via a non-3GPP interworking function (non-3GPP interworking function, N3IWF) or a next generation packet data gateway (next generation packet data gateway, ngPDG).

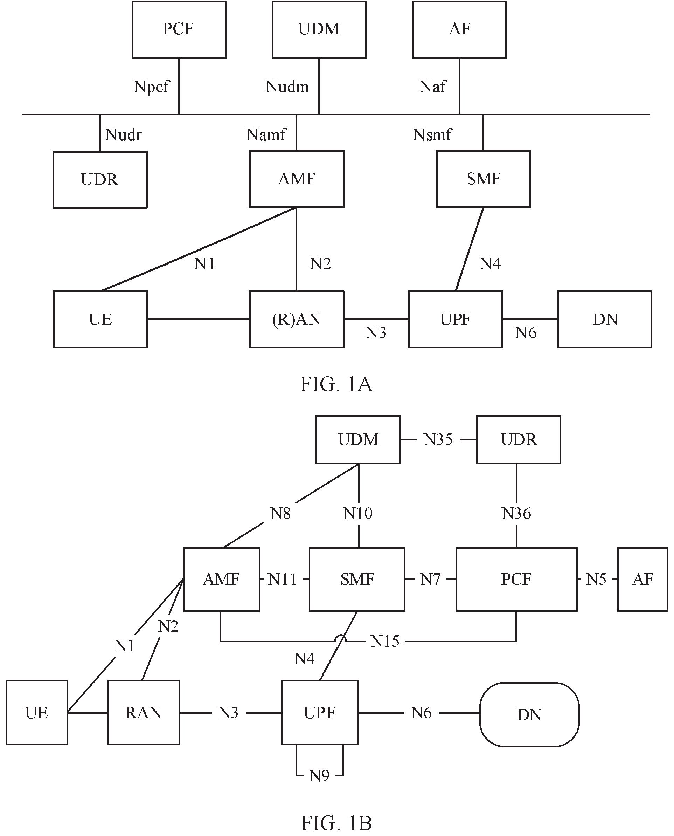

FIG. 1A is a diagram of a 5G network architecture based on a service-based architecture. The 5G network architecture shown in FIG. 1A may include an access network device and a core network device. A terminal accesses a data network (data network, DN) through the access network device and the core network device. The core network device includes but is not limited to a part or all of the following network elements: an authentication server function (authentication server function, AUSF) network element (not shown in the figure), a UDM network element, a UDR network element, a network repository function (network repository function, NRF) network element (not shown in the figure), a NEF network element (not shown in the figure), an application function (application function, AF) network element, a PCF network element, an AMF network element, an SMF network element, a user plane function (user plane function, UPF) network element, and a binding support function (binding support function, BSF) network element (not shown in the figure).

The terminal may be user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an urban air mobility vehicle (for example, an uncrewed aerial vehicle or a helicopter), a ship, a robot, a mechanical arm, a smart home device, or the like.

The access network device may be a radio access network (RAN) device or a fixed access network (fixed access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, a base station in a future mobile communication system, or a module or unit, for example, a central unit (central unit, CU) or a distributed unit (distributed unit, DU), that completes some functions of a base station. The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The fixed access network device includes but is not limited to: a wireline access gateway (wireline access gateway), a fixed-line phone network device, a switch, or a router.

The access network device and the terminal may be in fixed locations, or may be movable. The access network device and the terminal may be deployed on land, including an indoor device, an outdoor device, a hand-held device, or a vehicle-mounted device; may be deployed on water; or may be deployed on an airplane, a balloon, and an artificial satellite in air. Application scenarios of the access network device and the terminal are not limited in embodiments of this application.

The AMF network element includes mobility management, access authentication/authorization, and the like. In addition, the AMF network element is further responsible for transport for a user policy between the terminal and the PCF network element.

The SMF network element includes session management, execution of a control policy delivered by the PCF, UPF selection, allocation of an internet protocol (internet protocol, IP) address of the terminal, and the like.

The UPF network element includes user plane data forwarding, session/flow-level-based charging statistics collection, bandwidth limiting, and the like.

The UDM network element includes subscription data management, user access authorization, and the like.

The UDR network element includes storage and retrieval of subscription data, policy data, application data, and other types of data.

The NEF network element is configured to support exposure of capabilities and events.

The AF network element transfers requirements of an application side for a network side such as a quality of service (quality of service, QoS) requirement or user status event subscription. The AF may be a function entity of a service requester, or may be an operator-deployed application service, for example, an IP multimedia subsystem (IP multimedia subsystem, IMS) voice call service. The AF network element includes an AF network element in a core network (namely, an AF network element of an operator) and an AF network element of the service requester (for example, an application server of a specific enterprise).

The PCF network element is responsible for policy control functions such as charging at a session or service flow level, QoS bandwidth guarantee and mobility management, and terminal policy decision. The PCF network element includes an access and mobility management policy control function (access and mobility management policy control function, AM PCF) network element and a session management policy control function (session management PCF, SM PCF) network element. The AM PCF network element is configured to formulate an AM policy for the terminal, and the AM PCF network element may also be referred to as a policy control network element that provides a service for the terminal (PCF for UE). The SM PCF network element is configured to formulate a session management policy (session management policy, SM policy) for a session. The SM PCF network element may also be referred to as a policy control network element that provides a service for the session (PCF for a PDU session).

The NRF network element may be configured to: provide a network element discovery function, and provide, based on a request of another network element, network element information corresponding to a network element type. The NRF further provides network element management services such as network element registration, update, and deregistration and network element status subscription and push.

The BSF network element may provide registration/deregistration/update of a BSF service, detection of a connection to the NRF, session binding information creation, UE information obtaining, and session binding information query for duplicate IP addresses.

The AUSF network element is responsible for authentication on a user, to determine whether the user or a device is allowed to access a network.

The DN is a network outside an operator network. The operator network may access a plurality of DNs, and a plurality of services may be deployed on the DN, to provide a data service, a voice service, and/or the like for the terminal. For example, the DN is a private network of a specific smart factory, a sensor installed in a workshop of the smart factory may be the terminal, a control server for the sensor is deployed in the DN, and the control server can provide a service for the sensor. The sensor may communicate with the control server to obtain an instruction of the control server, transmit collected sensor data to the control server based on the instruction, and so on. For another example, the DN is an internal office network of a specific company, a mobile phone or a computer of an employee in the company may be the terminal, and the mobile phone or the computer of the employee may access information, a data resource, or the like in the internal office network of the company.

In FIG. 1A, Npcf, Nurf, Nudm, Naf, Namf, and Nsmf are respectively service-based interfaces provided by the PCF, the UDR, the UDM, the AF, the AMF, and the SMF, and are configured to invoke corresponding service-based operations. N1, N2, N3, N4, and N6 are interface sequence numbers. Meanings of these interface sequence numbers are as follows:
(1) N1 is an interface between the AMF and the terminal, and may be configured to transfer non-access stratum (non-access stratum, NAS) signaling (for example, including a QoS rule from the AMF) and the like to the terminal.
(2) N2 is an interface between the AMF and the access network device, and may be configured to transfer radio bearer control information from a core network side to the access network device, and the like.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF and the DN, and is configured to transfer uplink and downlink user data flows between the UPF and the DN.

FIG. 1B is a diagram of a 5G network architecture based on a point-to-point interface. For descriptions of functions of network elements in FIG. 1B, refer to the descriptions of the functions of the corresponding network elements in FIG. 1B. Details are not described again. A main difference between FIG. 1B and FIG. 1A lies in that interfaces between control plane network elements in FIG. 1A are service-based interfaces, and interfaces between control plane network elements in FIG. 1B are point-to-point interfaces.

In the architecture shown in FIG. 1B, names and functions of the interfaces between the network elements are as follows:
(1) For meanings of N1, N2, N3, N4, and N6 interfaces, refer to the foregoing descriptions.
(2) N5 is an interface between the AF network element and the PCF network element, and may be configured to deliver an application service request and report a network event.
(3) N7 is an interface between the PCF network element and the SMF network element, and may be configured to deliver control policies at a protocol data unit (protocol data unit, PDU) session granularity and a service data flow granularity.
(4) N8 is an interface between the AMF network element and the UDM network element, and may be used by the AMF network element to obtain access and mobility management-related subscription data and authentication data from the UDM network element, register terminal mobility management-related information with the UDM network element, and so on.
(5) N9 is a user plane interface between UPF network elements, and is configured to transfer uplink and downlink user data flows between the UPF network elements.
(6) N10 is an interface between the SMF network element and the UDM network element, and may be used by the SMF network element to obtain session management-related subscription data from the UDM network element, register terminal session-related information with the UDM network element, and so on.
(7) N11 is an interface between the SMF network element and the AMF network element, and may be configured to: transfer PDU session tunnel information between the access network device and the UPF, transfer a control message to be sent to the terminal, transfer radio resource control information to be sent to the access network device, and so on.
(8) N15 is an interface between the PCF network element and the AMF network element, and may be configured to deliver a terminal policy and an access control-related policy.
(9) N35 is an interface between the UDM network element and the UDR network element, and may be used by the UDM network element to obtain user subscription data information from the UDR network element.
(10) N36 is an interface between the PCF network element and the UDR network element, and may be used by the PCF network element to obtain policy-related subscription data and application data-related information from the UDR network element.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be a functional module in one device. This is not specifically limited in embodiments of this application.

A user plane network element, a session management network element, and a mobility management network element in this application may be respectively a UPF network element, an SMF network element, and an AMF network element in a 5G system, or may be network elements in a future communication network, for example, a 6th generation (6th generation, 6G) network, that have functions of the UPF network element, the SMF network element, and the AMF network element. This is not limited in this application. In embodiments of this application, descriptions are provided by respectively using the UPF network element, the SMF network element, and the AMF network element as examples of the user plane network element, the session management network element, and the mobility management network element. In addition, the UPF network element, the SMF network element, and the AMF network element are respectively referred to as a UPF, an SMF, and an AMF for short.

For ease of description, in embodiments of this application, descriptions are provided by using a base station (for example, an eNB in the 4th generation (the 4th generation, 4G), a gNB in 5G, or a base station in future communication) as an example of the access network device, and a "base station" in the following may be replaced with an "access network device". In embodiments of this application, descriptions are provided by using UE as an example of the terminal, and "UE" in the following may be replaced with a "terminal".

It may be understood that the core network may further include another network function entity. This is not limited in this application.

The technical solutions provided in embodiments of this application may be applied to various communication systems. For example, the technical solutions may be applied to a 5G system, and may also be applied to another future-oriented new system, for example, a 6G system. This is not specifically limited in embodiments of this application. In addition, the terms "system" and "network" may be interchangeably used.

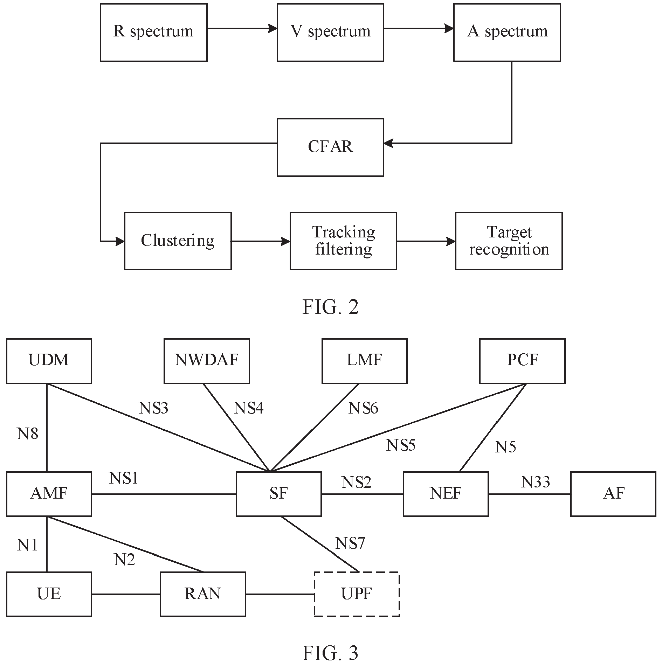

With development of communication networks, users have increasingly high sensing requirements for the networks. Sensing means transmitting an electromagnetic wave to a target object (for example, the RAN in FIG. 1A or FIG. 1B transmits the electromagnetic wave to the target object), obtaining a reflected echo for the electromagnetic wave, and determining information, such as a trajectory and a shape, about the target object based on characteristics of the echo and the radio electromagnetic wave. For example, FIG. 2 is a diagram of typical sensing processing. FIG. 2 shows a basic sensing process of a cellular base station. The sensing processing process is specifically as follows: ADC (analog to digital) sampling - sensing channel inversion calculation - a symbol-dimension FFT (Fast Fourier Transform) and IFFT (Inverse Fast Fourier Transform) to obtain a range spectrum (R spectrum) - inter-symbol FFT to obtain a velocity spectrum (V spectrum) - constant false alarm rate (constant false alarm rate, CFAR) detection - angle spectrum (A spectrum) calculation - single radio frame clustering - multi-radio frame data association - tracking filtering - target recognition. A sensing result may include whether a target object exists, a quantity of target objects, target recognition (for example, an animal, an uncrewed aerial vehicle, a vehicle, or a person), and a target trajectory (for example, a trajectory of the vehicle or a trajectory of the uncrewed aerial vehicle).

It should be noted that a target in this application may be replaced with a target object (target object) or an object (object).

The sensing may be applied to wide-area scenarios (such as low-altitude security for an uncrewed aerial vehicle, highway/railway intrusion detection, atmospheric environment detection, real-time management and control of borderline and coastline regions, and sensing assistance in a vehicle-road collaboration scenario) and local-area scenarios (such as smart home scenarios (health detection and home intrusion detection), smart factory scenarios (detection and tracking of an automated guided vehicle in a factory), and action posture recognition).

For better adaptation to sensing application, a sensing network element SF is introduced to the service-based architecture provided in this application. As shown in FIG. 3, interfaces are set between the SF and 5GC network elements such as an AMF, a NEF, a UDM, an NWDAF, a PCF, a location management function (location management function, LMF), and a UPF and the SF interacts with the 5GC network elements. Sensing control signaling between the SF and a RAN/UE is transferred through the AMF. Sensing measurement data obtained by the RAN/UE may be transmitted to the SF through a control plane or a user plane. For the user plane, the sensing measurement data may be forwarded by the UPF or directly transmitted to the SF. In addition, sensing charging in a scenario in which the UE performs sensing and a scenario in which the RAN performs sensing needs to be supported. That the interfaces are set between the sensing network element and the 5GC network elements such as the AMF, the NEF, the UDM, the NWDAF, the PCF, the LMF, and the UPF and the sensing network element interacts with the 5GC network elements is specifically defined as follows:
(1) NS1: The NS1 interface is newly added between the SF and AMF. The interface may be configured to transmit sensing control signaling. In a scenario in which the sensing measurement data is uploaded through the control plane, the interface may also be configured to transmit the sensing measurement data.
(2) NS2: The NS2 interface is newly added between the SF and NEF. The interface may be configured to: transmit a signaling message exchanged between the sensing network element and a service-side AF (Application Function, application function) and forwarded through the NEF, and expose a sensing result to the AF.
(3) NS3: The NS3 interface is newly added between the SF and the UDM. The interface is configured to: implement authentication or authorization, and obtain UE sensing subscription information, serving AMF information, or other information.
(4) NS4: The NS4 interface is newly added between the SF and the NWDAF. Sensing service-related AI (Artificial Intelligence, artificial intelligence) processing may be jointly completed by the sensing network element and the NWDAF through the interface.
(5) NS5: The NS5 interface is newly added between the SF and PCF. The sensing network element may transfer a sensing requirement, a QoS requirement, a sensing result, or the like of a sensing service to the PCF through the interface, and the PCF decides to generate a PCC policy related to the sensing service.
(6) NS6: The NS6 interface is newly added between the SF and the LMF. The sensing network element may obtain location related information such as a sensing area, RAN information of a sensing target, and location information of a sensed UE through the interface.
(7) NS7: The NS7 interface is newly added between the SF and the user plane function. The sensing measurement data may be directly transmitted from the (R)AN to the sensing network element through the user plane function, or may be indirectly forwarded to the sensing network element through the UPF. If the UPF performs forwarding in the scenario in which the (R)AN performs sensing, the UPF needs to be reconstructed to support RAN-granularity data transmission.

In addition to the foregoing newly added interfaces, existing interfaces (such as N1, N2, N5, N8, and N33) need to support transmission of sensing service-related information, such as authentication information, a sensing service type, a quality requirement of the sensing service, the sensing measurement data, and the sensing result.

If the sensing function is co-located with the LMF, an interface may be newly added between the LMF and a GMLC to transmit the sensing service-related information. Interfaces related to the LMF and the GMLC are, for example, an NL1 interface between the AMF and the LMF and an NL2 interface between the AMF and the GMLC.

As described in the background, uncrewed aerial vehicles will be widely used in future, and the country are increasingly supporting development of the uncrewed aerial vehicles. Currently, management reform methods for uncrewed aerial vehicles at low altitudes have been formulated, to mainly hand over management of airspace below 500 meters to public security. An uncrewed aerial vehicle has both a communication requirement and a supervision requirement, where the communication requirement mainly includes flight control and data backhaul. There are two types of supervision, including: supervising flight information (such as a flight trajectory and flight time) of the uncrewed aerial vehicle by using a military radar, and autonomously reporting flight information by the uncrewed aerial vehicle (the autonomous reporting by the uncrewed aerial vehicle is unreliable). If the supervision is performed by using the military radar, costs are high when a quantity of uncrewed aerial vehicles increases. In addition, radar vendors have different standards, and multi-radar fusion cannot be performed for a wide area.

For a supervision service, for an authorized uncrewed aerial vehicle, an ID of the uncrewed aerial vehicle is known in a network (to be specific, the uncrewed aerial vehicle carries a SIM card), and SIM card information of the uncrewed aerial vehicle and a route planned for the uncrewed aerial vehicle exist in the network. The uncrewed aerial vehicle may report a trajectory of the uncrewed aerial vehicle through a communication system. The trajectory may be a GPS trajectory of the uncrewed aerial vehicle or a trajectory obtained by the uncrewed aerial vehicle through positioning. Another trajectory is also obtained through sensing, and it may be known, through trajectory matching, whether an authorized flight is performed and whether the flight is deviated from the route (a flight target carrying a SIM card is not described in detail in this application).

Due to consideration by uncrewed aerial vehicle vendors, currently, flight targets without SIM cards account for the majority of data volumes in the market. To be specific, in this case, IDs and trajectories of the flight targets cannot be seen in the network, and the trajectories of the flight targets are independent trajectories. Currently, flights of many uncrewed aerial vehicles do not strictly comply with national regulations. As a result, "unauthorized" events such as intrusion into public and sensitive areas without permission, unexpected falls, impact on normal takeoff and landing of passenger airplanes, and collision with high-rise buildings happen occasionally. For an unauthorized uncrewed aerial vehicle, because an ID and a trajectory of the uncrewed aerial vehicle are not recorded in the network, using the foregoing unauthorized uncrewed aerial vehicle as an example, in this application, supervision and alarm, trajectory tracking, and identity confirmation and tracing of a person in charge may be performed on a special target by using a wide-area sensing advantage of a cellular base station. Using an unauthorized uncrewed aerial vehicle as an example, trajectories of the unauthorized uncrewed aerial vehicle may be spliced and recorded, and identity confirmation and tracing of a person in charge of the unauthorized uncrewed aerial vehicle may be performed based on spatial-temporal (time and space) association with the person in charge. Using an abnormally traveling vehicle in an autonomous driving scenario as an example, a trajectory of the vehicle may be traced and restored, and a person in charge of the vehicle may be associated and confirmed. Using intrusion of a foreign object on a railway/road as an example, a high-level alarm may be given for presence of the foreign object, and a person in charge of the foreign object may be associated and confirmed.

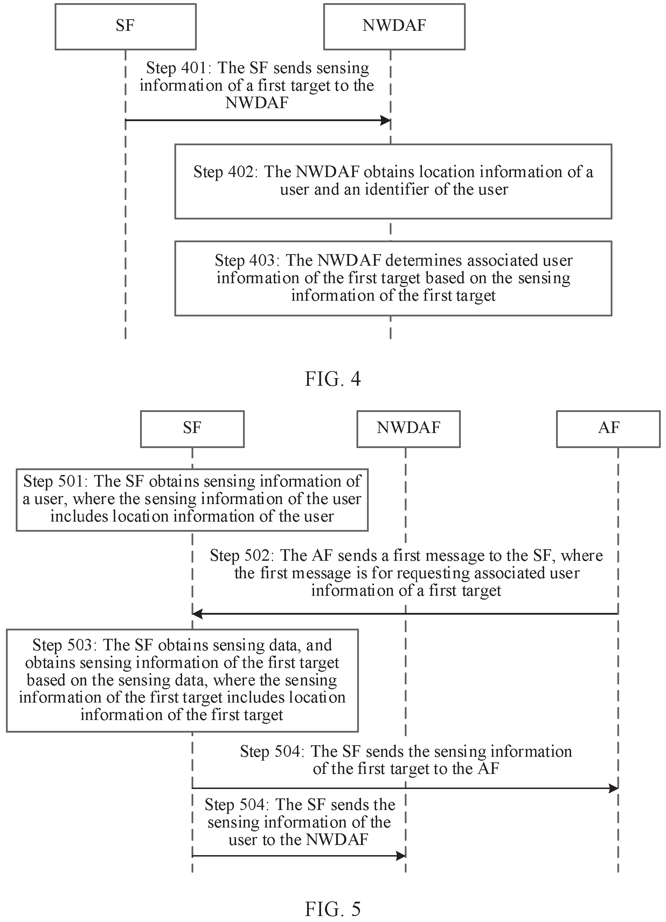

FIG. 4 shows a communication method according to this application, to better supervise behavior of a target object (for example, the foregoing abnormal vehicle, unauthorized uncrewed aerial vehicle, or foreign object that appears on the road/railway). The method may be performed through data exchange between a sensing network element and a network data analytics function. Certainly, another network element may be further involved during actual function application. This is not specifically limited herein in this application. The network data analytics function is mainly configured to perform calculation processing and the like, for example, statistics collection, analysis, and AI calculation, on data. The sensing network element is mainly configured to perform data processing, for example, clustering, tracking filtering, trajectory tracking, target recognition, and environment reconstruction, on sensing data uploaded by an access network device. Herein, an example in which the sensing network element is an SF and the network data analytics function is an NWDAF is used for description. The method is performed as follows:

Step 401: The SF sends sensing information of a first target to the NWDAF, where the sensing information of the first target includes location information of the first target.

The first target is a target with a SIM card or a target without a SIM card (to be specific, identifier authentication has not been performed in a core network, or an operator has not registered a device identifier/subscription to an operator network has not been performed). The target with a SIM card may be an uncrewed aerial vehicle with a SIM card, an autonomous vehicle with a SIM card, or the like. The target without a SIM card may be an uncrewed aerial vehicle without a SIM card, a stone that blocks a road, an animal that blocks a road, or the like. In this application, examples are provided herein for description, and no specific limitation is imposed.

In addition, it should be further noted that before step 401 is performed, the SF may perform data processing based on sensing data reported by a RAN after the RAN performs communication and sensing operations as a communication and sensing device, to determine the sensing information of the first target; or the SF may invoke related information of the first target from another device (a radar, a camera, or the like that is not in the operator network) to assist in determining the sensing information of the first target. How the SF determines the sensing information of the first target is not specifically limited herein in this application. In addition, the SF may receive a request message from another network element (for example, a sensing requester AF), and determine the sensing information of the first target based on the request message. This is not specifically limited herein in this application.

It should be noted that the target with a SIM card in this application may be understood as a target with a connection, or may be understood as a registered target in a network, a subscribed target in a network, a target on which authentication has been performed in a network, or an authorized target in a network. The target without a SIM card in this application may be understood as a target without a connection, or may be understood as an unregistered target in a network, an unsubscribed target in a network, a target on which authentication has not been performed in a network, or an unauthorized target in a network. The SIM card may alternatively be replaced with an international mobile subscriber identity (international mobile subscriber identity, IMSI), a subscription permanent identifier (subscription permanent identifier, SUPI), a subscription concealed identifier (subscription concealed identifier, SUCI), a generic public subscription identifier (generic public subscription identifier, GPSI), or a PEI (permanent equipment identifier), or may be an identifier that identifies a terminal device or user equipment in a future next generation network (for example, a 6G network or a 7G network).

In an optional implementation, the sensing information of the first target further includes one or more of the following: an appearance of the first target (the appearance may be appearance recognition information of the first target; and for example, the first target is an uncrewed aerial vehicle, a vehicle, a flying bird, or a stone), a detection area associated with the first target, trajectory information (for example, a moving trajectory) of the first target (the trajectory information may be understood as the location information of the first target; and for example, the trajectory information includes a string of location information), and time information of the first target (the time information may be understood as information about a moment at which the first target appears or information about a moment at which the first target is detected). The detection area associated with the first target may also be referred to as a detection range, and may be understood as an area planned with a detection radius by using the first target as a center, for example, a circular area. Certainly, the detection area may alternatively be an area of another shape during actual application. This is not specifically limited herein in this application. The time information of the first target may be understood as the information about the moment at which the first target is detected, for example, timestamp information corresponding to a moment at which point cloud data for the first target is detected. Locations and postures of the first target detected at different moments may be different. Therefore, the time information of the first target may be carried. In addition, during actual application, the sensing information of the first target may further include the moving trajectory information of the first target, for example, a 3GPP area (for example, a cell identity, a base station identity, a tracking area identity, or a PLMN identity) that the first target passes through or a trajectory including geographic location coordinates of the first target, to determine a moving route of the first target. The sensing information of the first target may further include identifier information of the first target, and the identifier is for confirming the first target. For example, two first targets exist in a specific location, and the first targets may be specifically distinguished based on identifiers. For another example, moving trajectories of a plurality of targets are spliced and distinguished, and different identifiers are for distinguishing different targets.

In addition, the request message in this application may be understood as a subscription message, an obtaining message, or the like. This may be understood as synonymous replacement herein, and is not specifically limited herein in this application.

Generally, the NWDAF needs to obtain related information of a user to determine a user associated with the first target. However, if the NWDAF has obtained or stored the related information of the user through an earlier-stage processing operation, the NWDAF may not obtain the related information of the user from another network element. To clearly describe the solutions of this application, an example in which the NWDAF obtains the related information of the user is used in step 402 in FIG. 4 for description. However, an execution occasion for step 402 is not limited herein, and step 402 may be performed before step 401, or may be performed after step 402.

Step 402: The NWDAF obtains location information of the user and an identifier of the user.

Specifically, the NWDAF may obtain the location information of the user and the identifier of the user from an AMF or the SF. Certainly, during actual application, the NWDAF may obtain the location information of the user and the identifier of the user from another network element, for example, from an OAM (operations, administration and maintenance) or a trace (trace) system. This is not specifically limited herein in this application. The location information of the user is geographic location information of the user, for example, longitude and latitude coordinates of the user, and the identifier of the user may be a UE ID. The user in this application may be understood as a terminal. The location information of the user is location information of a terminal, and the identifier of the user is an identifier of the terminal. As described above, the identifier of the terminal may include an identifier in the future 6G network or 7G network. This is not limited.

In addition, the NWDAF may actively/periodically obtain the location information of the user and the identifier of the user, or may obtain the location information of the user and the identifier of the user after receiving a request message from the SF. This is not specifically limited herein in this application.

Step 403: The NWDAF determines associated user information of the first target based on the sensing information of the first target.

It should be noted that, that the NWDAF determines the associated user information of the first target based on the sensing information of the first target may be understood as: The NWDAF determines (determining may be replaced with producing/generating/obtaining) the associated user information of the first target with reference to the sensing information of the first target and the related information of the user that is internally obtained by the NWDAF. The associated user information of the first target may be interpreted as user information corresponding to the first target/user information related to the first target, and may indicate that these users are highly possibly users, responsible persons, or persons in charge of the target. The detection area related to the first target may be interpreted as an area including a location of the first target, for example, an area centered on the location of the first target or an area including the location of the first target. The area may be an area represented by a geographic coordinate, or may be an area represented by a cell identity, a base station identity, a tracking area identity, and/or a PLMN identity.

Specifically, the NWDAF may determine a location relationship based on the location information of the first target and a location of the user. The location relationship may be that the locations are the same, the locations are within a distance threshold range, or the locations are beyond a distance threshold range. During actual application, a user in the same location or whose location is within the distance threshold range may be used as a candidate user of the user associated with the first target. For example, the location information of the first target indicates that the location of the first target is a place 1, and a location of a user 1 is the place 1. In this case, it can be learned that the first target and the user 1 are in the same location, the user 1 may be determined as a candidate user of the user associated with the first target, and an identifier of the user 1 may be recorded. For another example, if a location of a user 1 is within a preset distance range, the user 1 may be determined as a candidate user of the user associated with the first target.

In this application, the network data analytics function analyzes the sensing information of the first target to determine the associated user information of the first target. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

The associated user information that is of the first target and that is determined in step 403 may have a large range and low reliability. To improve the reliability, in an optional implementation, the NWDAF may obtain sensing information of the user. The NWDAF determines the associated user information of the first target based not only on the location information of the first target but also the sensing information of the user and at least one of the following: the appearance of the first target and time of the first target. The sensing information of the user may include one or more of the following: an appearance of the user (the appearance may be understood as recognition information or appearance recognition information of the user or appearance information of the user, is an expression form of long-distance biological information, may also be referred to as a form, the appearance, or a contour of the user, for example, a height, a body shape, a body width, a gender, an age group, or facial recognition information, and is not specifically limited herein), a gait of the user (the gait may be understood as a walking posture of the user, for example, a small step, a fast step, a walking style, a habit, and a stride, and gait recognition is to perform analysis processing on an image sequence including human body motions, where the analysis processing generally includes three processes, namely, gait detection, gait representation, and the gait recognition, and the like), a speed of the user (namely, a moving speed of the user), a distance of the user (namely, a distance between the user and the communication and sensing device (for example, a base station)), an angle of the user (namely, an angle of the user relative to the communication and sensing device), a direction of the user (the direction may be understood as a movement direction of the user, for example, a direction relative to the communication and sensing device (for example, the base station)), time of the user (namely, a moment at which the communication and sensing device senses/detects the user (for example, timestamp information for a point cloud)), sensing information of an object associated with the user (the sensing information may be understood as the sensing information of an object related to the user, a target or target object related to the user, an object corresponding to the user, or a target or target object corresponding to the user, and may be further interpreted as sensing information of a target or target object that is taken/carried/held/remotely controlled by the user or that is away from the user for a specific range, for example, information about an object taken by the user, where "taken" may be understood as "handheld", "head-mounted", "back-mounted", "carried", "remotely controlled", or the like, and is not specifically limited herein), and biological information of the user (the biological information may be understood as facial recognition information of the user, a fingerprint of the user, a skin color of the user, or the like, for example, information that is accurately recognized such as the fingerprint, an iris, or a facial feature, or that the user is a young girl, is an older woman, or has a special birthmark on the face, and this is not specifically limited herein in this application; and during actual application, the biological information may be determined with reference to image information captured by a camera).

Specifically, the NWDAF may determine the associated user information of the first target based on the location information of the first target, the appearance of the first target, the time of the first target, the sensing information of the user, the location information of the user, and the identifier of the user. This may be understood as: The NWDAF may obtain or determine the location information of the user based on the location information of the first target. If the locations are the same or the location of user is within a specific range from the location of the target, the user is considered as an associated user. Further, the time information of the first target may be compared with time information of the user, and users having the same time information or within a time threshold range or a specific time period may be selected, to further obtain information about objects associated with the users. Further, if it may be determined that appearances of an object associated with a user and the first target are the same, an identifier of the user may be collected or recorded, so that identifiers of these users may be recorded, and these users are used as the associated user information of the first target.

Certainly, during actual application, the NWDAF may determine the associated user information of the first target based on the following combinations: the location information of the first target and the sensing information of the user; the location information of the first target, the time information of the first target, and the sensing information of the user; the appearance of the first target and the sensing information of the user; the time information of the first target and the sensing information of the user; the location information of the first target, the appearance of the first target, and the sensing information of the user; or the location of the first target, the time information of the first target, the appearance of the first target, and the sensing information of the user. A specific determining manner is not specifically limited herein in this application.

It should be noted that the sensing information of the user may be obtained by the NWDAF from the SF. Specifically, the NWDAF may send a third message to the SF, where the third message is for obtaining the sensing information of the user. The NWDAF obtains the sensing information of the user from the SF. Specifically, a sensing context (the sensing context may also be referred to as a stereoscopic context, a twin context, or the like, and this is not specifically limited herein) of the user (including the sensing information of the user) may be created in the SF. The NWDAF sends a request message to the SF to obtain the sensing information of the user, the NWDAF may subscribe to the sensing information of the user from the SF, or the NWDAF periodically obtains the sensing information of the user from the SF. This is not limited.

Alternatively, the sensing information may be obtained by the NWDAF from the AMF. Specifically, the NWDAF sends a fourth message to the AMF, where the fourth message is for obtaining the sensing information of the user. The NWDAF receives the sensing information of the user from the AMF. Specifically, a sensing context of the user (including the sensing information of the user) may be created in the AMF. The NWDAF sends a request message to the AMF to obtain the sensing information of the user, the NWDAF may subscribe to the sensing information of the user from the SF, or the NWDAF periodically obtains the sensing information of the user from the SF. This is not limited.

For step 403, in another optional implementation, the NWDAF determines an area in which the first target is located (specifically, the area may be within a range of the detection area, or may be greater than a range of the detection area, for example, within a neighborhood range of the detection area, and this is not specifically limited herein). The NWDAF determines, based on the location information of the user, a first user (namely, a user whose user identifier may be known) in the area in which the first target is located. The NWDAF determines the associated user information of the first target based on the sensing information of the first target and sensing information of the first user (for example, an identifier of the first user and address information of the first user, where the identifier of the first user may be locally and/or non-locally obtained, and this is not specifically limited herein; and "locally" means obtaining from a local core network, for example, a core network of an operator 1, and "non-locally" means obtaining from a non-local core network, for example, a core network of an operator 2). Specifically, the NWDAF may determine, based on the location information of the first target and location information of the first user, whether locations are the same or within the distance threshold range or the distance range, to determine whether the user is a user associated with the first target. If the distances are the same or within the distance threshold range or the distance range, the identifier of the user is recorded. It should also be noted that the NWDAF obtains the associated user information of the first target locally and/or non-locally. "Locally" may mean local storage or configuration by the NWDAF, and "non-locally" may mean obtaining by the NWDAF from another network element. For example, a user identifier corresponding to the first target is obtained from an NWDAF of another PLMN.

In addition, because the first target may continuously move, different detection areas may be determined based on a current location of the first target. A quantity of occurrences of a user in the detection area is counted, and a user with a large quantity of occurrences is used as a user associated with the first target. Specifically, the NWDAF determines the quantity of occurrences of the user in the detection area. The NWDAF deletes, from the user associated with the first target, a user whose quantity of occurrences is less than or equal to a first parameter, to obtain a second user, and uses the second user as a user with highest association with the first target. The first parameter may be an integer or a character. This is not limited.

In addition, in an optional implementation, the NWDAF further receives a first message from the AF, where the first message is for requesting the associated user information of the first target. The NWDAF may request to obtain the associated user information of the first target from the SF (specifically, the request may be sent by using an independent request message, or may be sent by reusing another message, and this is not specifically limited herein in this application), and send the associated user information of the first target to the AF. The NWDAF obtains the associated user information of the first target based on the request of the AF, to assist the AF (for example, a regulatory authority) in reducing supervision costs, and avoid resource overheads caused by the AF through large-scale screening of users associated with the first target.

In an optional implementation, the NWDAF further receives a second message from the AF, where the second message is for requesting the location information of the first target, or is for obtaining a notification for the first target (to be specific, whether the first target is found, and the notification is reported if the first target is found). The NWDAF requests to obtain the location information of the first target or the notification for the first target from the SF (specifically, the request may be sent by using an independent request message, or may be sent by reusing another message, and this is not specifically limited herein in this application). The NWDAF sends the location information of the first target or the obtained notification for the first target to the AF. The request for the location information of the first target or the obtaining of the notification for the first target from the NWDAF is triggered based on the request of the AF, to give a timely alarm for an abnormal target, to avoid a public resource loss or privacy leakage caused when the abnormal target enters an area.

It should be noted that, in the related example in FIG. 4, the associated user information of the first target is mainly determined by the NWDAF. However, during actual application, the associated user information of the first target may alternatively be determined by the SF. For details, refer to FIG. 5 for understanding. A method may be performed through interaction between a sensing network element and a sensing requester. Certainly, another network element may be further involved during actual function application. This is not specifically limited herein in this application. An example in which the sensing network element is an SF, a network data analytics function is an NWDAF, an access and mobility management network element is an AMF, and the sensing requester is an AF is used herein for description. The method is performed as follows:
Step 501: The SF obtains sensing information of a user, where the sensing information of the user includes location information of the user.

Specifically, the SF may autonomously determine the sensing information of the user, or may obtain the sensing information of the user from another network element, for example, the AMF. This is not specifically limited herein in this application. For the sensing information of the user, refer to descriptions of step 403 in FIG. 4 for understanding, and details are not described herein again.

Step 502: The AF sends a first message to the SF, where the first message is for requesting associated user information of a first target.

Specifically, in an actual application process, the first message may alternatively be sent by the AF through the NWDAF, a NEF, or another core network element. This is not specifically limited herein in this application.

In addition, the AF may further send a second message to the SF, where the second message is for requesting location information of the first target, or is for obtaining a notification for the first target (to be specific, whether the first target is found, and the notification is reported if the first target is found). The sensing network element sends a response message for the second message to the sensing requester. In an actual application process, the second message may alternatively be sent by the AF through the NWDAF, the NEF, or another core network element. This is not specifically limited herein in this application. The response message for the second message may include the location information of the first target or the notification for the first target, and may further include other information such as a sensing message of the first target. This is not specifically limited herein in this application.

Step 503: The SF obtains sensing data, and obtains the sensing information of the first target based on the sensing data, where the sensing information of the first target includes the location information of the first target.

Specifically, the sensing data may be from a communication and sensing device (for example, a base station). After obtaining the sensing data, the SF may perform data processing with reference to the process in FIG. 2 to obtain the sensing information of the first target. Details are not described herein. In addition, the sensing information of the first target further includes other information. Refer to descriptions of step 401 in FIG. 4 for understanding, and details are not described herein again.

Step 504: The SF sends the sensing information of the first target and the sensing information of the user.

It should be noted that "obtains" in "obtains the sensing information of the first target based on the sensing data" may be replaced with "determines". In addition, "the sensing network element sends the sensing information of the first target and the sensing information of the user" does not merely mean that the sensing information of the first target and the sensing information of the user are simultaneously sent to a same receiver, but may also mean that the sensing information of the first target and the sensing information of the user are sent to different receivers in different messages. For example, the sensing network element sends the sensing information of the first target to the sensing requester, and sends the sensing information of the user to the network data analytics function or the access and mobility management network element. In addition, the sensing requester may be replaced with an application function (application function, AF), a third party, a sensing third-party, a sensing application, or the like. This is not limited. In addition, for the first message, "is for requesting" may also be understood as "is for subscribing to", "is for obtaining", or the like. This is not specifically limited herein in this application. The "sensing information" may be replaced with a "sensing context", a "user stereoscopic context", a "sensing stereoscopic context", or the like. The sensing information is not specifically limited in this application.

It should be noted that the sensing information of the first target and the sensing information of the user are sent to different target objects, but may be sent on a same occasion, and may be sent at a same moment or different moments. This is not specifically limited herein in this application. The SF may send the sensing information of the first target to the AF, and the SF may send the sensing information of the user to the NWDAF or the AMF. In FIG. 5, an example in which in step 504, the SF sends the sensing information of the first target to the AF, and sends the sensing information of the user to the NWDAF is used for description.

In this application, the sensing network element determines the associated user information of the first target based on the sensing data. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

During actual application, to know the sending target object in step 504, the SF may receive a third message from the AMF, where the third message is for triggering the SF to obtain sensing information of a first user, and the third message includes an identifier of the first user and a first area of the first user. The SF obtains the sensing information of the first user. The SF sends the sensing information of the first user to the NWDAF. The first user may be a registered user or a user who has not registered after subscription or card activation. This is not specifically limited herein in this application. In addition, the third message may carry only the identifier of the first user, or may carry both the identifier of the first user and the first area of the first user. This is not limited in this application.

The SF may further receive a fourth message from the AMF, where the fourth message is for requesting to obtain sensing information of a user in a first area, and the fourth message includes the first area in which a first user is located. The SF obtains the sensing information of the user in the first area. The SF sends the sensing information of the user in the first area to the AMF.

The first area is associated with a current connection management state (connection management state, CM state) of the first user. For example, if the first user is in a connected state, the first area is a cell identity (cell ID). If the first user is in an idle state, the first area may be a tracking area identity (TAI).

The triggering in this application may be understood as requesting/indicating/notifying/triggering, and the obtaining the sensing information of the first user in this application may be replaced with generating/producing/determining/establishing/creating the sensing information of the first user.

It should be noted that the first area in this specification may include the cell identity (cell ID), a base station/access network identity, the tracking area identity/a tracking area code (TAI/TAC), a public land mobile network identity (PLMN ID), a service area identity SAI, a central unit identity CU ID, a distributed unit identity DU ID, a transmission reception point identity TRP ID, or the like. These are merely examples for description herein, and is not specifically limited herein in this application.

In an optional embodiment, the SF sends a fifth message, where the fifth message is for requesting to obtain the associated user information of the first target, and the fifth message includes one or more of the following: a detection area related to the first target, an identifier of the first target, trajectory information of the first target, and the location information of the first target. The SF receives a response message for the fifth message, where the response message for the fifth message includes the associated user information of the first target. The SF determines the associated user information of the first target. Specifically, the SF may send the fifth message to the AMF or the NWDAF. This is not specifically limited herein in this application. The AMF or the NWDAF may determine the associated user information of the first target based on one or more of the detection area of the first target, the identifier of the first target, the moving trajectory information of the first target, and the location information of the first target.

In addition, because the first target may continuously move, different detection areas may be determined based on different moving states. An occurrence frequency or a quantity of occurrences of a user in the detection area is counted, and a user with a high occurrence frequency is used as a user associated with the first target. Specifically, the SF determines the quantity of occurrences of the user in the detection area. The SF deletes, from the user associated with the first target, a user whose quantity of occurrences is less than or equal to a first parameter, to obtain a second user, and uses the second user as a user with highest association with the first target.

In addition, if the fifth message is sent by the SF to the AMF, the AMF may determine the identifier of the first user in the detection area based on the detection area of the first target. The AMF sends the identifier of the first user to the SF. Specifically, the AMF may determine a corresponding RAN based on the detection area of the first target. The RAN determines the identifier of the first user. Specifically, the RAN may determine UE in the detection area based on the detection area and a UE uplink advance range. For example, UE within a UE uplink advance range in the detection area is used as the first user.

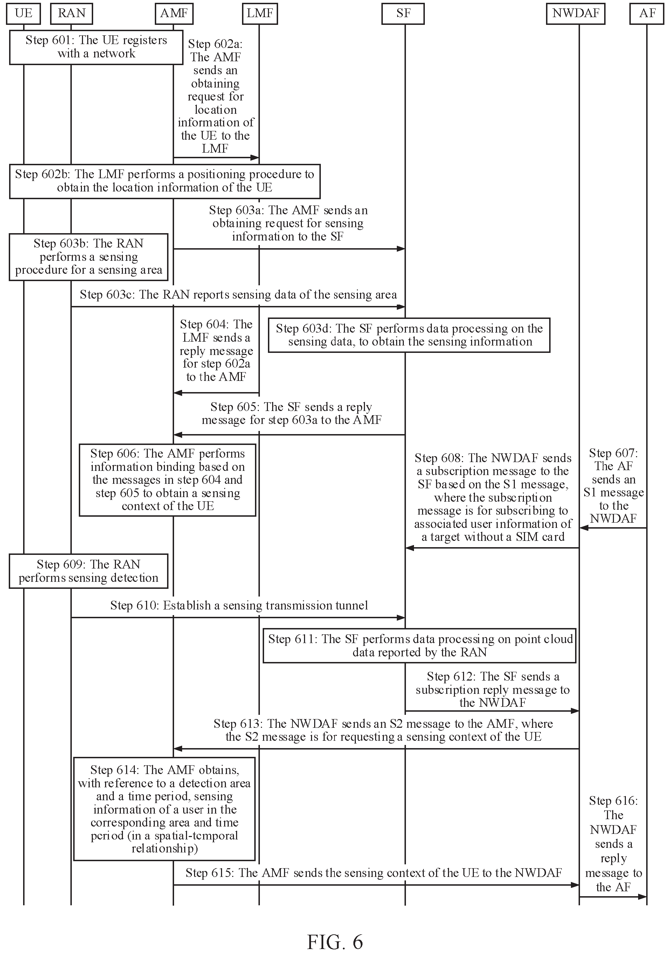

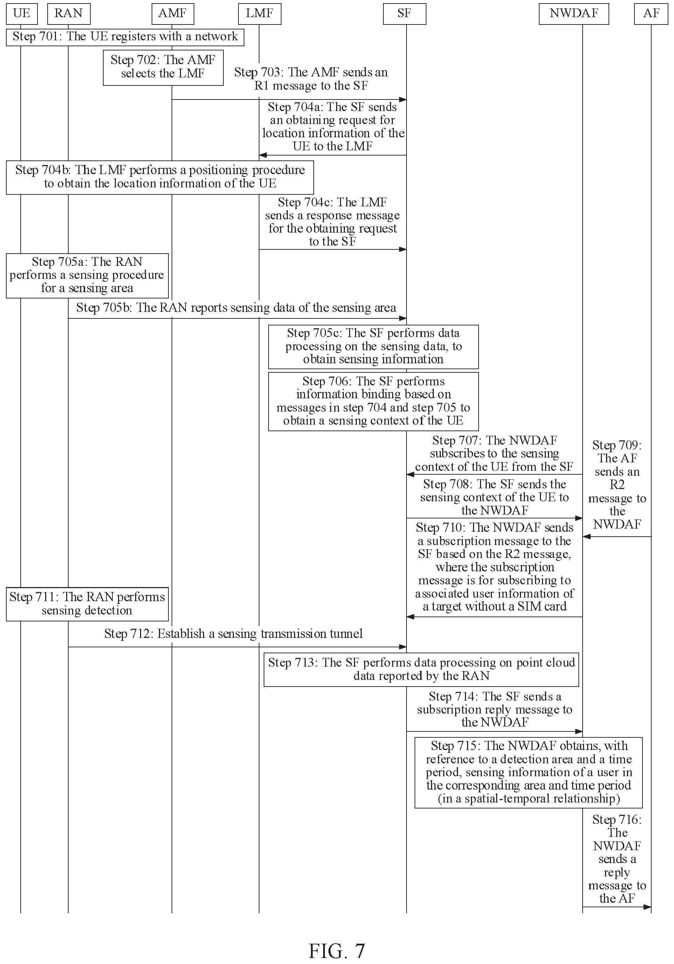

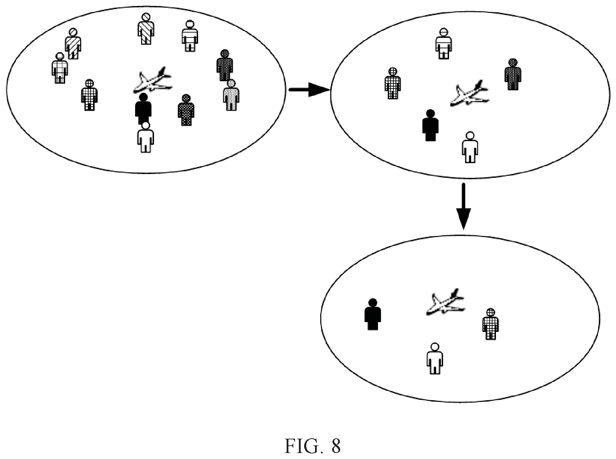

To describe the solutions of this application more vividly, the following uses an example in which the first target is an uncrewed aerial vehicle for description. During actual application, the uncrewed aerial vehicle includes an uncrewed aerial vehicle limited by a remote control distance. For example, a distance between the uncrewed aerial vehicle and a remote controller is limited within a range of 1.5 kilometers to 3 kilometers. The uncrewed aerial vehicle further includes an uncrewed aerial vehicle that is not limited by a remote control distance. For example, an uncrewed aerial vehicle in Suzhou may be controlled by an uncrewed aerial vehicle operator in Beijing. For another example, an uncrewed aerial vehicle may take off automatically after being placed in a specific location for a period of time and fly on a preset route. The following describes, by using FIG. 6 and FIG. 7, solutions applicable to both of the two types of uncrewed aerial vehicles. Solutions to the uncrewed aerial vehicle limited by the remote control distance are described by using FIG. 8 to FIG. 16C.

Sensing information of a user in FIG. 6 and FIG. 7 is obtained by using a sensing context. In one case, an AMF determines the sensing context. In another case, an SF determines the sensing context. The solutions are described below in different cases, and are executed as follows:

### Case 1: The AMF determines the sensing context.

Refer to a schematic flowchart shown in FIG. 6. The method may be described with data exchange between UE, a RAN, the AMF, an LMF, the SF, an NWDAF, and an AF, and is performed as follows:
Step 601: The UE registers with a network.

Specifically, the UE may send a registration request to the AMF through the RAN, to register with the network. How the UE registers with the network is not specifically limited herein in this application. For understanding, refer to a related procedure in the 3GPP technical specification TS 23.502.

After the UE completes the registration, the AMF triggers execution of step 602 (including step 602a and step 602b) and step 603 (including step 603a to step 603d). Step 602 and step 603 may be performed in no sequence. Step 602 may be performed first, step 603 may be performed first, or step 602 and step 603 may be performed simultaneously. This is not limited herein.

Step 602a: The AMF sends an obtaining request for location information of the UE to the LMF.

Specifically, the obtaining request may carry information about a first area (if the UE is in a connected state, location reference information may be a cell identity (cell ID); or if the UE is in an idle state, the information about the first area may be a tracking area identity (TAI)), and may further carry identification information of the UE.

Step 602b: The LMF performs a positioning procedure to obtain the location information of the UE.

Optionally, the location information may be geographic coordinate information, for example, longitude and latitude information. Specifically, for the positioning procedure, refer to a related procedure in the 3GPP technical specification TS 23.273. Details are not described herein.

Step 603a: The AMF sends an obtaining request for sensing information to the SF.

Specifically, the obtaining request may carry the information about the first area (if the UE is in the connected state, the location reference information may be the cell identity (cell ID); or if the UE is in the idle state, the information about the first area may be the tracking area identity (TAI)).

Step 603b: The RAN performs a sensing procedure for a sensing area.

Specifically, the sensing procedure of the RAN may be understood with reference to FIG. 3, and details are not described herein again. In addition, the sensing area may be understood as an area in which the location reference information of the UE is located. For example, if the location reference information of the UE is a cell 1, a needed area is an area in which the cell 1 is located. Alternatively, the sensing area may be understood as including an area in which the location reference information of the UE is located. For example, if the location reference information of the UE is a cell 1, a needed area is a cell 1, a cell 2, a cell 3, and the like. These are merely examples herein for description, and constitute no specific limitation.

Step 603c: The RAN reports sensing data of the sensing area.

Specifically, the sensing data may be sensing measurement data of the RAN, and may include point cloud data, temperature data, or the like. This is not specifically limited herein. In addition, the RAN may periodically report the sensing data, and for example, a periodicity is 100 ms or 320 ms. The sensing data may carry timestamp information (namely, a moment of a sampling point of an echo for an electromagnetic wave).

Step 603d: The SF performs data processing on the sensing data to obtain the sensing information, where the sensing information includes a location coordinate of a target (namely, the UE).

Specifically, the data processing includes clustering, tracking filtering, and the like. A location coordinate of a sensing target may be a location of a sensing target cluster. For example, target recognition may be performed according to a micro-Doppler recognition algorithm. In addition, target recognition and image formation may be further performed to obtain a contour, gait information, a location, a speed, an angle, a direction, time information, and the like of a human body. For details, refer to the sensing information of the user in step 403 in FIG. 4 for understanding. This is not specifically limited herein.

Step 604: The LMF sends a reply message for step 602a to the AMF, where the reply message carries the location information of the UE and an identifier of the UE.

Step 605: The SF sends a reply message for step 603a to the AMF, where the reply message carries the sensing information of a user.

Step 606: The AMF performs information binding or association based on the messages in step 604 and step 605, to obtain a sensing context of the UE.

Specifically, the AMF may compare the location information of the UE with the sensing information of the user for further user binding. Because the location information of the UE may be obtained based on the sensing information of the user, and may also be obtained through positioning performed by the LMF, the sensing information may be bound to information about the UE through comparison of the location information of the UE, to obtain the identifier, a location, a speed, an angle, a direction, contour information, gait information, and time information of the UE. Therefore, the foregoing information may be supplemented to a context of the UE. In comparison with a conventional UE context, three-dimensional information (the contour information, the gait information, and the like) is added after the information is supplemented to the context of the UE. Therefore, the context of the UE may be referred to as the sensing context, a stereoscopic context, or a digital twin context of the UE.

The NWDAF may periodically obtain the sensing information of the user from the AMF, for example, in a subscription manner or a request reply manner.

Step 607: The AF sends an S1 message to the NWDAF.

Specifically, the S1 message may be a subscription request message, and may be sent by using an Nnwdaf_AnalyticsSubscription_Subscribe request; or may be an analytics request message, and may be sent by using Nnwdaf_AnalyticsInfo_Request. The request message may carry S1 information, where the S1 information is for obtaining associated user information of a target without a SIM card (for example, an example of a first target, where the target without a SIM card may be an unauthorized uncrewed aerial vehicle, namely, a device on which identifier authentication has not been performed in a core network, in other words, a device that has no SIM card identifier and therefore has not registered with an operator network). In addition, the S1 information is further for triggering the NWDAF to contact the SF (to be specific, if the S1 information is not added, the NWDAF cannot be triggered to contact the SF).

Step 608: The NWDAF sends a subscription or request message to the SF based on the S1 message, where the subscription message is for subscribing to the associated user information of the target without a SIM card.

Specifically, the associated user information of the target without a SIM card may be user information around the target without a SIM card. The subscription message may be a new message, or may reuse a subscription message Nnwdaf_AnalyticsSubscription_Subscribe, where an additional information element may be newly added to indicate the subscription to the associated user information of the target without a SIM card.

Step 609: The RAN performs sensing detection.

Specifically, the sensing detection may be understood with reference to FIG. 3. An electromagnetic wave transmitted to a target object is reflected, and RVA spectrum calculation is performed by using characteristics of the radio electromagnetic wave, including a frequency offset, a phase offset, a delay, and the like. The RAN undertakes a digital signal processing part, including the digital signal processing part (I/Q data receiving, ADC sampling, and fast Fourier transforms (an FFT and an IFFT)), range-velocity-angle RVA spectrum generation, and constant false alarm rate (CFAR) detection. Processing performed by the core network after the core network receives sensing data (point cloud data is used as an example herein) includes a general data processing part (single radio frame clustering, multi-radio frame data association for a single station, and sensing result generation (trajectory information of a target, whether the target exists, a quantity of targets, and target recognition)). The core network exposes sensing information to the AF. Because of wide-area sensing, sensing detection may be performed in a scenario in which a target without a connection takes off for the first time/a target without a connection enters a supervision area for the first time. In addition, it should be further noted that the trajectory information of the target may be understood as a list of cells that the target passes through and duration of staying in each cell, or may be understood as information including geographic location coordinates, for example, a geographic location coordinate array or linked list.

Step 610: Establish a sensing transmission tunnel.

Specifically, the RAN may establish a data transmission channel to the SF by exchanging control plane signaling. Optionally, the data transmission channel may pass through the UPF. The RAN reports sensing measurement data (for example, point cloud data). A reporting periodicity may be, for example, 100 ms or 320 ms. This is not limited herein in this application.

Step 611: The SF performs data processing on the point cloud data reported by the RAN.

Specifically, the SF performs clustering and data association on the reported point cloud data. The clustering may be understood as clustering of sampling points included in a single radio frame (for example, calculating a Euclidean distance between the point cloud data based on a related attribute of the point cloud data, where points less than a threshold may form a cluster) and multi-radio frame data association for a single station. After the foregoing operations, clusters may be formed, and the clusters also include attributes such as a location, RVA, and energy. Further, the SF may form a sensing result (for example, whether a target exists, a quantity of targets, trajectory information of the target, and target recognition). A location coordinate of the sensing target (namely, a location of a target cluster, where for example, an uncrewed aerial vehicle/a flying bird may be distinguished according to a micro-Doppler recognition algorithm, and this belongs to an internal algorithm layer and is not described in detail in this application) is obtained through step 603d.

Step 612: The SF sends a subscription reply message to the NWDAF.

Specifically, the subscription reply message carries a location of the target without a SIM card and information about a detection area.

Step 613: The NWDAF sends an S2 message to the AMF, where the S2 message is for requesting a sensing context of UE.

Specifically, the S2 message sent by the NWDAF may carry the information about the detection area (for example, information about a detection area defined by using the location of the target without a SIM card as a center). If the information about the detection area is carried, sensing information of all users in the detection area is obtained. The S2 message may further carry time information, namely, a time period before a current moment of the target without a SIM card.

Step 614: The AMF obtains sensing information of a user in the corresponding area and time period (in a spatial-temporal relationship) with reference to the detection area and the time period.

Specifically, the sensing information of the user (namely, the sensing context of the UE) includes a UE ID, a location, a speed, an angle, a direction, contour information, gait information, and time information.

Step 615: The AMF sends the sensing context of the UE to the NWDAF.

Step 616: The NWDAF sends a reply message to the AF.

Specifically, the reply message may further carry a confidence corresponding to the UE (namely, a confidence corresponding to each ID, for example, a probability-based recommendation that the UE ID is a flyer, where because the NWDAF is an AI network element, and includes a combination of an AI model and an AI algorithm, the NWDAF may perform related processing according to a supervised learning algorithm or an unsupervised learning algorithm) in addition to the UE ID, and further carries current trajectory information of the target without a SIM card (namely, a trajectory including locations of the target without a SIM card).

It should be noted that during actual application, step 607 and step 608 may alternatively be performed before step 601, and step 609 to step 611 may alternatively be performed before step 601. This is not specifically limited herein in this application.

### Case 2: The SF determines the sensing context.

Refer to a schematic flowchart shown in FIG. 7. The method may be described with data exchange between UE, a RAN, the AMF, an LMF, the SF, an NWDAF, and an AF, and is performed as follows:
Step 701: The UE registers with a network.

For understanding, refer to step 601 in FIG. 6, and details are not described herein again.

After the UE completes the registration, the AMF triggers execution of step 703, to notify, through step 703, the SF to generate sensing information of a user.

Step 703: The AMF sends an R1 message to the SF.

The R1 message is for notifying the SF to generate the sensing information of the user, and the R1 message may carry information about a first area (if the user is in a connected state, location information may be a cell identity (cell ID); or if the user is in an idle state, location information may be a tracking area identity (TAI)), and further carries identification information of the user.

Optionally, before performing step 703, the AMF may select the LMF, in other words, perform step 702.

Step 702: The AMF selects the LMF.

For example, the AMF may select the LMF based on the location information of the user, and send an ID of the LMF to the SF.

The SF triggers execution of step 704 (including step 704a to step 704c) and step 705 (including step 705a to step 705c). Step 704 and step 705 may be performed in no sequence. Step 704 may be performed first, step 705 may be performed first, or step 704 and step 705 may be performed simultaneously. This is not limited herein.

Step 704a: The SF sends an obtaining request for the location information of the UE to the LMF.

If step 702 is not performed, the SF may autonomously select an LMF to send the obtaining request. If step 702 is performed, the SF may send the obtaining request to the LMF selected by the AMF. The obtaining request may carry reference information of the first area (if the UE is in the connected state, the information about the first area may be the cell identity (cell ID); or if the UE is in the idle state, the information about the first area may be the tracking area identity (TAI)), and further carries the identification information of the UE.

Step 704b: The LMF performs a positioning procedure to obtain the location information of the UE.

This step may be understood with reference to step 602b, and details are not described herein again.

Step 704c: The LMF sends a response message for the obtaining request to the SF.

Specifically, the response message includes the location information of the UE and the identification information of the UE.

Step 705a: The RAN performs a sensing procedure for a sensing area.

Specifically, the sensing procedure of the RAN may be understood with reference to FIG. 3, and details are not described herein again. In addition, the sensing area may be understood as an area in which location reference information of the UE is located. For example, if the location reference information of the UE is a cell 1, a needed area is an area in which the cell 1 is located. Alternatively, the sensing area may be understood as including an area in which location reference information of the UE is located. For example, if the location reference information of the UE is a cell 1, a needed area is a cell 1, a cell 2, a cell 3, and the like. These are merely examples herein for description, and constitute no specific limitation.

Step 705b: The RAN reports sensing data of the sensing area.

Specifically, the sensing data may be sensing measurement data of the RAN, and may include point cloud data, temperature data, or the like. This is not specifically limited herein. In addition, the RAN may periodically report the sensing data, and for example, a periodicity is 100 ms or 320 ms. The sensing data may carry timestamp information (namely, a moment of a sampling point of an echo for an electromagnetic wave).

Step 705c: The SF performs data processing on the sensing data to obtain the sensing information, where the sensing information includes a location coordinate of a target (namely, the UE).

Specifically, the data processing includes clustering, tracking filtering, and the like. A location coordinate of a sensing target may be a location of a sensing target cluster. For example, target recognition may be performed according to a micro-Doppler recognition algorithm. In addition, target recognition and image formation may be further performed to obtain a contour, gait information, a location, a speed, an angle, a direction, contour information, gait feature information, time information, and the like of a human body. This is not specifically limited herein.

Step 706: The SF performs information binding based on messages in step 704 and step 705 to obtain a sensing context of the UE.

Specifically, the SF may compare the location information of the UE with the sensing information for further user binding. Because the location information of the UE may be obtained based on the sensing information, and may also be obtained through positioning performed by the LMF, the sensing information may be bound to information about the UE through comparison of the location information of the UE, to obtain an identifier, a location, a speed, an angle, a direction, contour information, gait information, and time information of the UE. Therefore, the foregoing information may be supplemented to a context of the UE. In comparison with a conventional UE context, three-dimensional information (the contour information, the gait information, and the like) is added after the information is supplemented to the context of the UE. Therefore, the context of the UE may be referred to as the sensing context, a stereoscopic context, or a digital twin context of the UE. In this case, the conventional UE context may be referred to as the stereoscopic context of the UE, the digital twin context of the UE, or the sensing context of the UE.

Step 707: The NWDAF subscribes to or requests the sensing context of the UE from the SF.

Step 708: The SF sends the sensing context of the UE to the NWDAF.

In step 707 and step 708, the NWDAF may periodically obtain the sensing context obtained by the SF in step 706; the SF may periodically notify the NWDAF of the sensing context obtained in step 706; or after learning the contour and gait information of the user, the NWDAF may stop obtaining the sensing context of the UE from the SF. This is not limited herein in this application.

Step 709: The AF sends an R2 message to the NWDAF.

Step 710: The NWDAF sends a subscription message to the SF based on the R2 message, where the subscription message is for subscribing to associated user information of a target without a SIM card.

Step 711: The RAN performs sensing detection.

Step 712: Establish a sensing transmission tunnel.

Step 713: The SF performs data processing on point cloud data reported by the RAN.

Step 714: The SF sends a subscription reply message to the NWDAF.

Step 709 to step 714 may be understood with reference to step 607 to step 612, and details are not described herein again.

Step 715: The NWDAF obtains, with reference to a detection area and a time period, sensing information of a user in the corresponding area and time period (in a spatial-temporal relationship).

Specifically, with reference to the information received from the SF in an information collection phase (namely, step 707 and step 708), the NWDAF performs screening on a sensing context of related UE by using a location of the target without a SIM card + the time period + appearance recognition information of the target without a SIM card, to determine the sensing information of the user. For example, sensing information of all users who appear in the location of the target without a SIM card in the specified time period is used as screening parameters, or the sensing information of the user is selected and determined based on current spatial-temporal information corresponding to the target without a SIM card. Optionally, if the appearance recognition information of the target without a SIM card is carried, the appearance recognition information may also be used as one of screening parameters.

Step 716: The NWDAF sends a reply message to the AF.

For details, refer to step 616 in FIG. 6 for understanding, and the details are not described herein again.

It should be noted that during actual application, step 709 and step 710 may be performed before step 701, or may be performed after step 711 to step 714. This is not specifically limited herein in this application.

The following describes the solutions to the uncrewed aerial vehicle limited by the remote control distance. First, a core processing idea is briefly described by using FIG. 8. Users in a detection area of the uncrewed aerial vehicle are determined based on the area. As the uncrewed aerial vehicle moves, the detection area keeps changing, and the users are continuously updated. A user associated with the uncrewed aerial vehicle is determined through continuous iteration and update. As shown in FIG. 8, there are 10 users in an initial detection area; and as the detection area keeps changing and is continuously updated, the 10 users change to five users, and finally change to three users. In this case, the three users are users most associated with the uncrewed aerial vehicle.

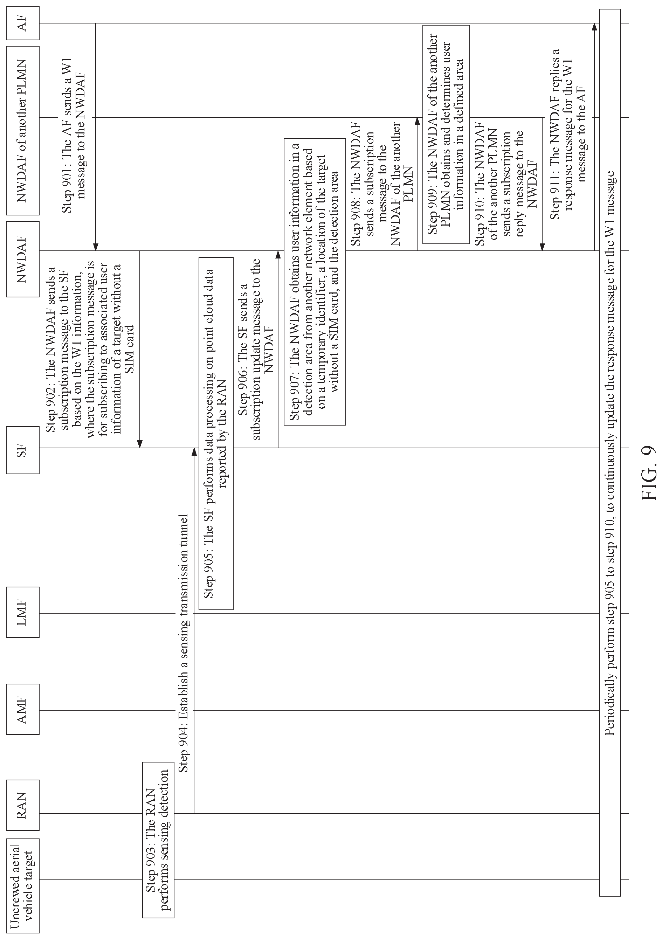

Refer to a schematic flowchart shown in FIG. 9. The method may be described with data exchange between an uncrewed aerial vehicle target, a RAN, an AMF, an LMF, an SF, an NWDAF, an NWDAF of another PLMN, and an AF, and is performed as follows:
Step 901: The AF sends a W1 message to the NWDAF.

Specifically, the W1 message may be a subscription request message, and may be sent by using an Nnwdaf_AnalyticsSubscription_Subscribe request; or may be an analytics request message, and may be sent by using Nnwdaf_AnalyticsInfo_Request. The request message may carry W1 information, where first information is for obtaining associated user information of a target without a SIM card (for example, the target without a SIM card may be an unauthorized uncrewed aerial vehicle, namely, a device on which identifier authentication has not been performed in a core network, in other words, a device that has no SIM card identifier and therefore has not registered with an operator network). In addition, the W1 information is further for triggering the NWDAF to contact the SF (to be specific, if the W1 information is not added, the NWDAF cannot be triggered to contact the SF).

Optionally, the AF further carries a detection area. The detection area may be represented by a geographic area, or may be represented by a 3GPP area. A detection range is represented as a detection area extended from a location of the target without a SIM card, for example, a circle with the target without a SIM card as a center and the detection range as a radius. Only an example is described herein. During actual application, the detection area is not necessarily a circle.

Step 902: The NWDAF sends a subscription message to the SF based on the W1 information, where the subscription message is for subscribing to the associated user information of the target without a SIM card.

For understanding, refer to step 608, and details are not described herein again.

Step 903: The RAN performs sensing detection.

Specifically, the sensing detection may be understood with reference to FIG. 3. An electromagnetic wave transmitted to a target object is reflected, and RVA spectrum calculation is performed by using characteristics of the radio electromagnetic wave, including a frequency offset, a phase offset, a delay, and the like. The RAN undertakes a digital signal processing part, including the digital signal processing part (I/Q data receiving, ADC sampling, and fast Fourier transforms (an FFT and an IFFT)), range-velocity-angle RVA spectrum generation, and constant false alarm rate (CFAR) detection. Processing performed by the core network after the core network receives sensing data (point cloud data is used as an example herein) includes a general data processing part (single radio frame clustering, multi-radio frame data association for a single station, and sensing result generation (trajectory information of a target, whether the target exists, a quantity of targets, and target recognition)). The core network exposes sensing information to the AF. Because of wide-area sensing, sensing detection may be performed in a scenario in which a target without a connection takes off for the first time/a target without a connection enters a supervision area for the first time. In addition, it should be further noted that the trajectory information of the target may be understood as a list of cells that the target passes through and duration of staying in each cell.

Step 904: Establish a sensing transmission tunnel.

Specifically, the RAN may establish a data transmission channel to the SF by exchanging control plane signaling. Optionally, the data transmission channel may pass through the UPF. The RAN reports sensing measurement data (for example, point cloud data). A reporting periodicity may be, for example, 100 ms or 320 ms. This is not limited herein in this application. Optionally, the transmission tunnel may pass through the UPF.

Step 905: The SF performs data processing on the point cloud data reported by the RAN.

Specifically, the SF performs clustering and data association on the reported point cloud data. The clustering may be understood as clustering of sampling points included in a single radio frame (for example, calculating a Euclidean distance between the point cloud data based on a related attribute of the point cloud data, where points less than a threshold may form a cluster) and multi-radio frame data association for a single station. After the foregoing operations, clusters may be formed, and the clusters also include attributes such as a location, RVA, and energy. Further, the SF may form a sensing result (for example, whether a target exists, a quantity of targets, trajectory information of the target, and target recognition). A location coordinate of the sensing target (namely, a location of a target cluster, where for example, an uncrewed aerial vehicle/a flying bird may be distinguished according to a micro-Doppler recognition algorithm, and this belongs to an internal algorithm layer and is not described in detail in this application) is obtained through step 902.

The SF allocates a temporary identifier to the sensing target in the sensing result, and periodically sends a location of the sensing target and the detection area (for the detection area, the 3GPP area may be selected, or the geographic area may be converted into the 3GPP area) to the NWDAF. The SF may periodically determine a latest area as an input of the NWDAF with reference to the location of the sensing target and the detection range. Optionally, data inputs of a radar and a camera may further assist the SF in recognition. For example, after obtaining the location of the sensing target, the SF may perform target imaging by using the camera. This is merely an example for description and is not specifically limited herein.

Step 906: The SF sends a subscription update message or a request message to the NWDAF.

Specifically, the subscription update message may carry the temporary identifier of the sensing target, location information of the target without a SIM card, information about the detection area, and the trajectory information (for example, an angle and a direction) of the target. Optionally, the subscription update message may be a new message; or an Nnwdaf_AnalyticsSubscription_Subscribe message may be reused, where the foregoing fields, for example, the temporary identifier, the location information of the target without a SIM card, the information about the detection area, and the trajectory information of the target, may be carried in an enhanced manner.

Step 907: The NWDAF obtains user information in the detection area from another network element based on the temporary identifier, the location of the target without a SIM card, and the detection area.

Optionally, if the SF provides only the location of the sensing target and the detection range, the NWDAF may autonomously generate the detection area. The another network element may be the AMF, an SMF, a UDM, an OSS, a trace system, an LCS system, or the like. As enumerated in Table 1, the SF may obtain identification information of UE and location information of the UE (a 3GPP location and a corresponding timestamp, for example, an identity of a cell in which the UE is located, an identity of a base station serving the UE, or a tracking area identity or tracking area code (a TAI or TAC)) from the AMF. The SF may obtain geographic location information (for example, longitude and latitude information, geographic area description information, or location coordinate information) of the UE from a GMLC. The SF may obtain moving distance information of the UE from the AMF. These are merely examples herein for description, and details are not described one by one.

**Table 1**

| Information | Source | Description |
|---|---|---|
| UE ID | AMF | SUPI |
| Location of the UE | AMF | Cell ID or TAI |
| Geographic coordinate location of the UE | LMF | Longitude and latitude, coordination, or UE position |
| UE access behavior trends | AMF | Metrics on UE state transitions (e.g. access, RM and CM states, or handover) |
| Location of the UE | Trace system (or OSS) | Longitude and latitude, coordination, or UE position |

Step 908: The NWDAF sends a subscription message to the NWDAF of the another PLMN, where the subscription message is for subscribing to user information in a defined area around the target without a SIM card.

Specifically, the subscription message may be a new message for subscribing to the user information from another operator, may carry the temporary identifier of the sensing target, the location of the sensing target, and the detection area, and provides a user information amount threshold (to be specific, only an amount of user information that is specified by the threshold needs to be provided, and for example, the threshold is an integer value). In addition, the defined area in step 908 may be the detection area, or may be greater than the defined area. This is not specifically limited herein in this application.

Step 909: The NWDAF of the another PLMN obtains and determines the user information in the defined area.

Specifically, refer to step 907 for execution. For example, the NWDAF of the another PLMN obtains the user information in the defined area from a local network element of the another PLMN. This is not specifically limited herein.

Optionally, step 905 to step 909 are periodically performed, to continuously update the user information in the detection area.

Step 910: The NWDAF of the another PLMN sends a subscription reply message to the NWDAF, where the subscription reply message carries the temporary identifier of the sensing target and user information whose amount is less than or equal to the user information amount threshold.

In addition, in step 908 to step 910, a case in which terminal devices (for example, mobile phones) carried by users in the defined area are users of China Mobile/China Unicom/China Telecom/China Broadcasting Network (that is, of different operators) in an actual scenario is considered, and it is considered that a sensing function is not necessarily deployed for each operator (to be specific, a sensing base station and a sensing function network element SF are not necessarily deployed for each operator). In step 910, the temporary identifier of the sensing target and the user information whose amount is less than or equal to the user information amount threshold are carried (the user information may include identification information of a user, the identification information may be a SUPI, an IMSI, or the like, and the user information amount threshold may be set in consideration of solution execution costs, where for example, a capability of carrying user information by an interface message is limited, and the user information amount threshold is a maximum amount of user information that can be carried).

Step 911: The NWDAF replies a response message for the W1 message to the AF.

Specifically, the response message for the W1 message includes a session identifier or a service identifier corresponding to the temporary identifier of the sensing target, a UE ID corresponding to the temporary identifier of the sensing target, the trajectory information of the sensing target, a UE confidence, or the like. This is merely an example for description, and is not specifically limited herein.

Optionally, step 905 to step 910 are periodically performed, to continuously update the response message for the W1 message.

It should be noted that, the NWDAF may reply to the AF in step 911 after summarization processing is completed, or the NWDAF may perform periodic processing and reply to the AF. This is not limited herein in this application. The summarization processing may be completed with termination of a flight of the target without a SIM card (it may be understood that, for each location point on a trajectory, a circle is drawn based on the detection range, SIM-card user information in the circle is determined, and user information whose occurrence frequency is higher than a threshold in the specified range is collected, in other words, a quantity of SIM-card users associated with the target without a SIM card is gradually reduced).

In addition, it should be further noted that, during actual application, step 903 to step 905 may be performed first. For example, processing in step 903 to step 905 are performed first. If the SF finds that a target without a SIM card appears, the SF sends a start location coordinate of a related sensing cluster (for example, if there are two targets, there are two start coordinates) to the AF (for example, a regulatory authority) by using a dedicated notification message. Then, the AF initiates step 901 and step 902, and the AF allocates an identifier corresponding to the reported start location coordinate of the sensing target. In this case, the AF performs step 901, where first information is carried, and the allocated temporary identifier and the start coordinate that is of the target and that corresponds to the temporary identifier are further carried. After receiving a subscription message, the SF may distinguish different targets based on start coordinates of the targets, or may associate a start coordinate with a corresponding temporary identifier allocated by the AF. The SF continues to perform the procedure after step 905.

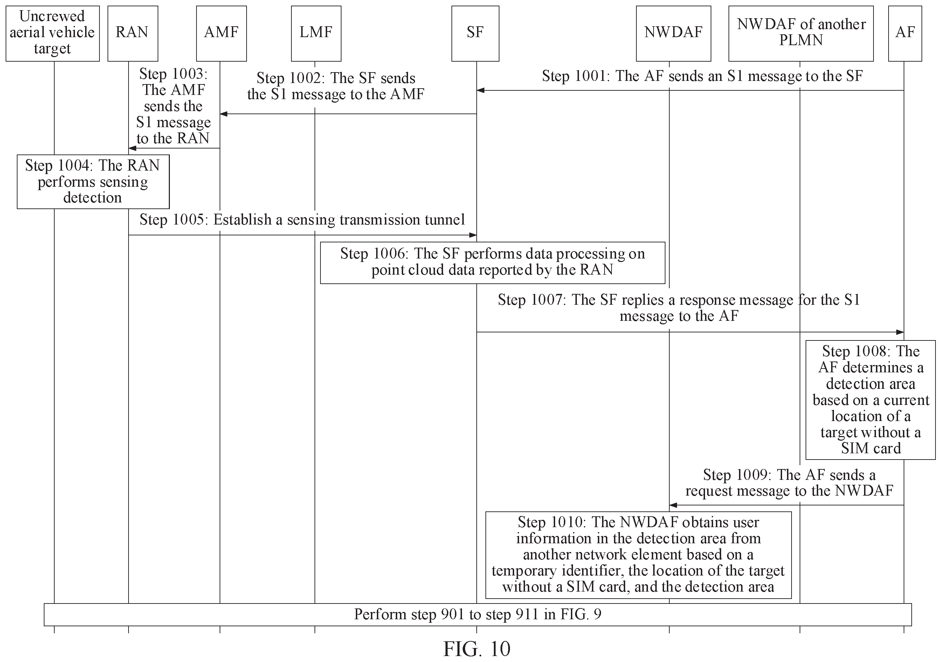

Refer to a schematic flowchart shown in FIG. 10. The method may be described with data exchange between an uncrewed aerial vehicle target, a RAN, an AMF, an LMF, an SF, an NWDAF, an NWDAF of another PLMN, and an AF, and is performed as follows:
Step 1001: The AF sends an S1 message to the SF.

Specifically, the S1 message carries a sensing service type, a sensing target area (for example, which may be a geographic area, where the geographic area may be an area represented by longitude and latitude coordinates), sensing QoS (for example, including range resolution, velocity resolution, angular resolution, a refresh rate, or a maximum field of view (field of view, FOV)), a sensing delay, or the like, and further carries information for requesting to subscribe to a notification for a target without a SIM card (namely, a notification indicating that the target without a SIM card is detected) and/or a latest location (location information, for example, a location of the target without a SIM card and subsequent moving location information, may be included when the notification is reported).

Step 1002: The SF sends the S1 message to the AMF.

Step 1003: The AMF sends the S1 message to the RAN.

Specifically, the SF may determine, based on the sensing target area, the AMF having a management capability, and then the AMF determines and selects the RAN to perform sensing detection.

Step 1004: The RAN performs sensing detection.

Step 1005: Establish a sensing transmission tunnel.

Step 1006: The SF performs data processing on point cloud data reported by the RAN.

Specifically, refer to step 903 to step 905 in FIG. 9 for understanding, and details are not described herein again.

Step 1007: The SF replies a response message for the S1 message to the AF.

Specifically, the response message for the S1 message is for notifying the AF whether the target without a SIM card appears. If the target without a SIM card appears, the response message may further carry a service identifier (specifically, the service identifier may correspond to temporary identifiers of a plurality of targets without SIM cards) and the location of the target without a SIM card.

Step 1008: The AF determines a detection area based on the current location of the target without a SIM card.

Step 1009: The AF sends a request message to the NWDAF.

The request message may be an analytics subscription request message (Nnwdaf_AnalyticsSubscription_Subscribe request) or an analytics request message (Nnwdaf_AnalyticsInfo_Request), and carries the detection range area.

Step 1010: The NWDAF obtains user information in the detection area from another network element based on a temporary identifier, the location of the target without a SIM card, and the detection area.

For understanding, refer to step 907 in FIG. 9, and details are not described herein again.

Optionally, after receiving the message in step 1007, the AF may further trigger execution of step 901 to step 911 in FIG. 9. This is not specifically limited herein in this application.

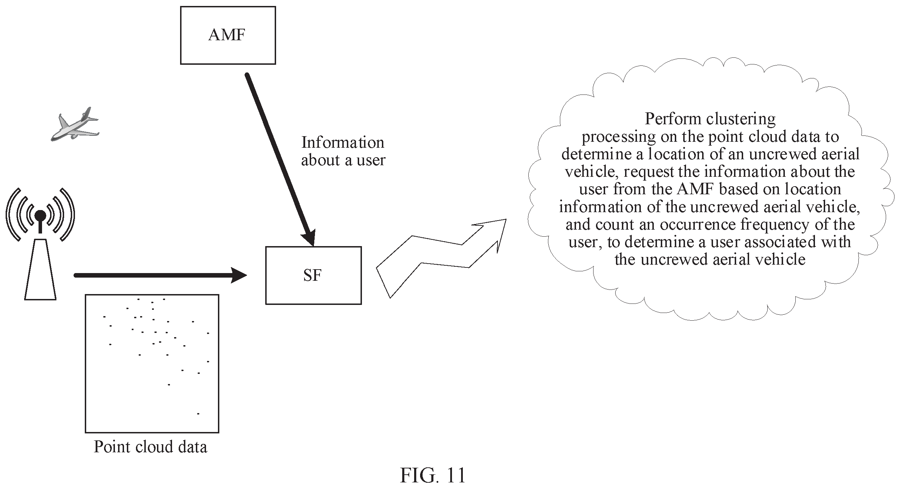

In FIG. 9 and FIG. 10, the user information is determined through the NWDAF. In the following example, user information is determined through an AMF, a RAN, or the like instead of an NWDAF. A principle diagram is briefly described in FIG. 11. A communication and sensing device (namely, the RAN) may report point cloud data after sensing an uncrewed aerial vehicle. Clustering processing may be performed after the point cloud data is reported to an SF, to determine location information of the uncrewed aerial vehicle. User information is requested from the AMF based on the location information of the uncrewed aerial vehicle. The SF counts an occurrence frequency of a user, to determine a user associated with the uncrewed aerial vehicle.

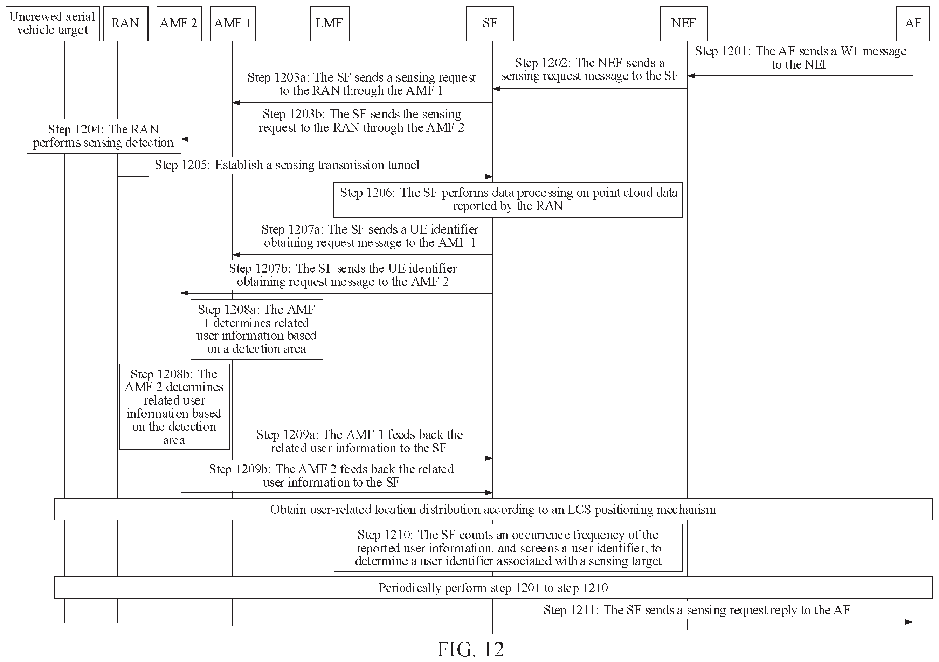

Refer to a schematic flowchart shown in FIG. 12. The method may be described with data exchange between an uncrewed aerial vehicle target, a RAN, an AMF 1, an AMF 2, a UPF, an LMF, an SF, a NEF, and an AF, and is performed as follows:
Step 1201: The AF sends a W1 message to the NEF.

Specifically, the W1 message carries a sensing service type, a sensing target area (for example, which may be a geographic area, where the geographic area may be an area represented by longitude and latitude coordinates), sensing QoS (for example, including range resolution, velocity resolution, angular resolution, a refresh rate, or a maximum field of view (field of view, FOV)), a sensing delay, or the like, and further carries a detection area or a detection range (which may be understood as a detection radius) for obtaining user information around a target without a SIM card. Alternatively, the W1 message carries one piece of indication information, where the indication information is for requesting to obtain associated user information of or user information around a target without a SIM card (an example of a first target) (the target without a SIM card may be, for example, an unauthorized uncrewed aerial vehicle or a foreign object, for example, an animal or a falling stone, intruded on a high-speed railway or a highway).

Step 1202: The NEF sends a sensing request message to the SF.

Specifically, the sensing request message carries a related information element of the W1 message.

Step 1203a: The SF sends a sensing request to the RAN through the AMF 1.

Step 1203b: The SF sends the sensing request to the RAN through the AMF 2.

Step 1204: The RAN performs sensing detection.

Step 1205: Establish a sensing transmission tunnel.

Step 1206: The SF performs data processing on point cloud data reported by the RAN.

Specifically, refer to step 903 to step 905 in FIG. 9 for understanding, and details are not described herein again.

In addition, in step 1206, the SF determines an AMF based on a location of a sensing target and the defined detection area. In FIG. 12, an example in which AMFs determined by the SF are the AMF 1 and the AMF 2 is used for description.

Step 1207a: The SF sends a UE identifier obtaining request message to the AMF 1.

Step 1207b: The SF sends the UE identifier obtaining request message to the AMF 2.

Specifically, a temporary identifier of the sensing target, a location coordinate of the sensing target, the detection area, or the detection radius may be carried in step 1207a and step 1207b.

Step 1208a: The AMF 1 determines related user information based on the detection area.

Step 1208b: The AMF 2 determines related user information based on the detection area.

Specifically, the user information is user information in a connected state (for example, for a user in a connected state, the AMF may obtain user location information (user location information, ULI) of the user, an NCGI (NR cell global identifier) in the ULI includes a base station identity and a cell identity, and an identifier of a user managed by a base station may be determined based on the base station identity and/or the cell identity), and includes a user identifier UE ID.

Step 1209a: The AMF 1 feeds back the related user information to the SF.

Step 1209b: The AMF 2 feeds back the related user information to the SF.

Specifically, the user information fed back in step 1209a and step 1209b includes a UE identifier list.

Step 1210: The SF counts an occurrence frequency or a quantity of occurrence times of the reported user information, and screens the user identifier to determine a user identifier associated with the sensing target.

Specifically, the SF may reserve an identifier of UE whose occurrence frequency is greater than an occurrence frequency threshold, and delete an identifier of UE whose occurrence frequency is less than the occurrence frequency threshold.

Optionally, before step 1210 is performed, user-related location distribution may be obtained according to a location service (location service, LCS) positioning mechanism (because an LCS knows a correspondence between a user identifier and a user location, but the SF knows the location of the sensing target, the location of the sensing target and a location of the user need to be associated).

During actual application, the location of the sensing target is not fixed, and the detection area centered on the sensing target is not fixed either. Therefore, step 1201 to step 1210 may be periodically performed. As the detection area changes, the user identifier associated with the sensing target is also continuously updated. In a detection area update process, if one or more user identifiers are always in the user identifier list obtained by the SF through statistics collection, it is considered that these user identifiers are user identifiers with highest association with the sensing target.

Step 1211: The SF sends a sensing request reply to the AF.

Specifically, the temporary identifier of the sensing target, a trajectory of the sensing target, and the UE identifier list (including a confidence corresponding to each UE ID (specifically, the confidence may be determined with reference to an occurrence frequency of UE and UE behavior information, and a manner of determining the confidence is not described herein in detail in this application)) may be carried in step 1211.

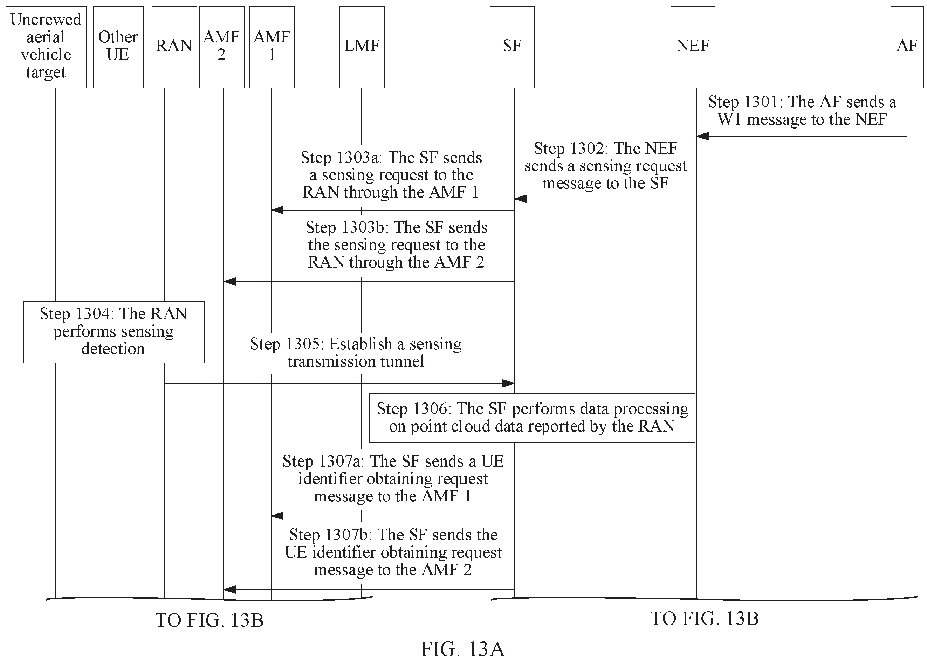

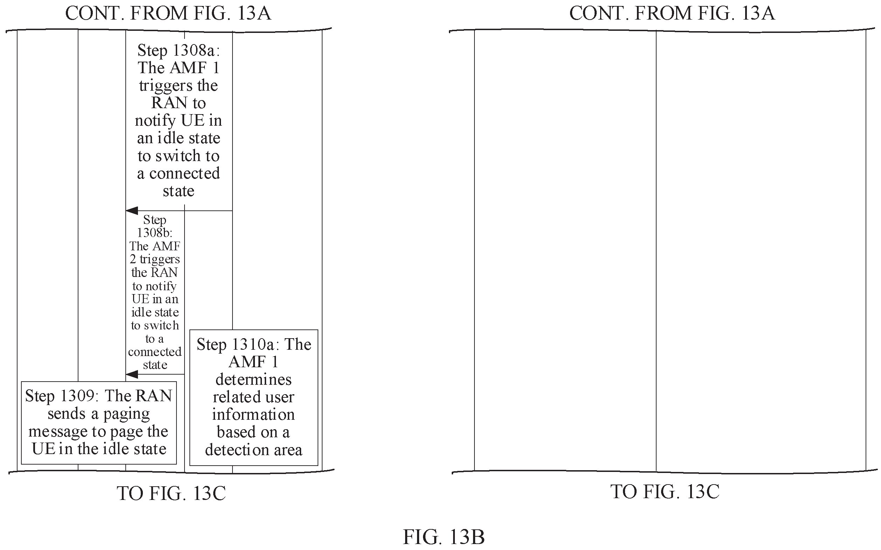

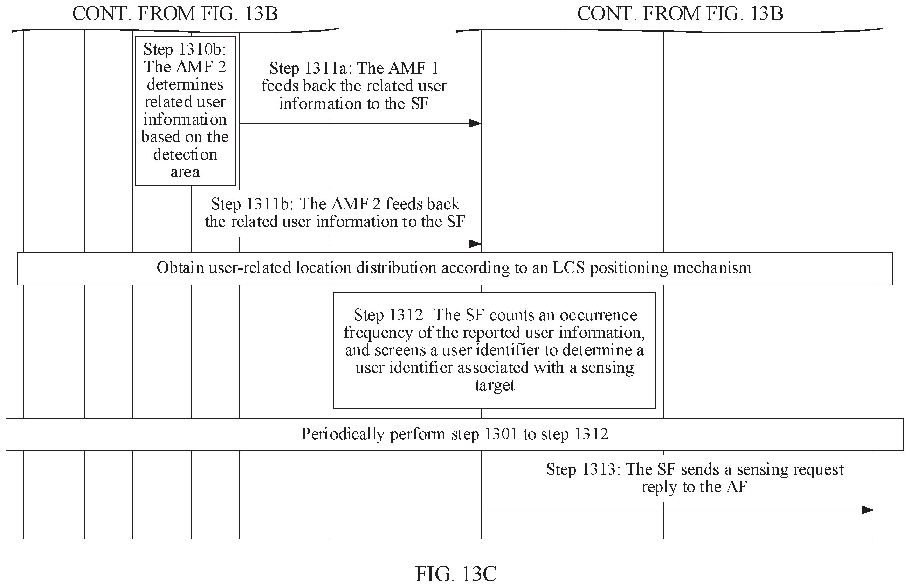

Considering that UE may be in an idle state in an actual application process, to more accurately determine a user associated with a sensing target, a UE paging procedure is added in comparison with the example in FIG. 12. The method may be described with data exchange between an uncrewed aerial vehicle target, other UE, a RAN, an AMF 1, an AMF 2, a UPF, an LMF, an SF, an NWDAF, and an AF. Specifically, refer to FIG. 13A to FIG. 13C, and the method is performed as follows:
Step 1301: The AF sends a W1 message to a NEF.
Step 1302: The NEF sends a sensing request message to the SF.
Step 1303a: The SF sends a sensing request to the RAN through the AMF 1.
Step 1303b: The SF sends the sensing request to the RAN through the AMF 2.
Step 1304: The RAN performs sensing detection.
Step 1305: Establish a sensing transmission tunnel.
Step 1306: The SF performs data processing on point cloud data reported by the RAN.
Step 1307a: The SF sends a UE identifier obtaining request message to the AMF 1.
Step 1307b: The SF sends the UE identifier obtaining request message to the AMF 2.

For step 1301 to step 1307b, refer to step 1201 to step 1207b in FIG. 12 for understanding, and details are not described herein again.

Step 1308a: The AMF 1 triggers the RAN to notify UE in an idle state to switch to a connected state or notify a user in an idle state to return to a connected state.

Step 1308b: The AMF 2 triggers the RAN to notify UE in an idle state to switch to a connected state or notify a user in an idle state to return to a connected state.

Step 1309: The RAN sends a paging message to page the UE in the idle state.

Specifically, the paging message may be a SIB message, or may be a message specially for paging UE. This is not specifically limited herein in this application.

Step 1310a: The AMF 1 determines related user information based on a detection area.

Step 1310b: The AMF 2 determines related user information based on the detection area.

Step 1311a: The AMF 1 feeds back the related user information to the SF.

Step 1311b: The AMF 2 feeds back the related user information to the SF.

Step 1312: The SF counts an occurrence frequency of the reported user information, and screens a user identifier to determine a user identifier associated with a sensing target.

Step 1313: The SF sends a sensing request reply to the AF.

Specifically, for step 1310a to step 1313, refer to step 1208a to step 1211 in FIG. 12 for understanding, and details are not described herein again.

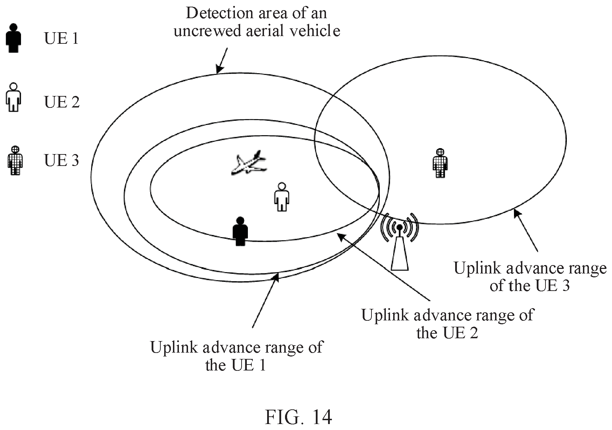

In FIG. 12 and FIG. 13A to FIG. 13C, the user identifier is determined through the AMF. However, during actual application, the user identifier may alternatively be determined through an access network device (namely, the RAN). Specifically, refer to FIG. 14 for understanding. A detection area of an uncrewed aerial vehicle has been determined, and an uplink advance range of UE may also be determined. As shown in FIG. 14, the detection area includes an uplink advance range of UE 1 (an area determined by using a distance between a communication and sensing device and the UE 1 as a radius and the UE 1 as a center) and an uplink advance range of UE 2, and an uplink advance range of UE 3 overlaps the detection area. Therefore, the RAN may report the UE 1 and the UE 2 to the AMF, to be specific, report UE whose uplink advance range is in the detection area.

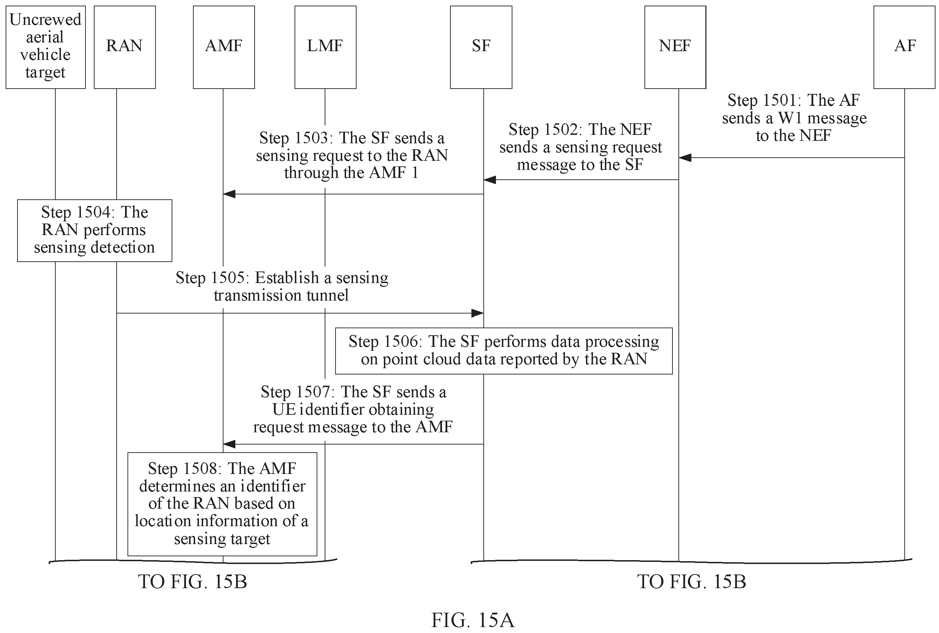

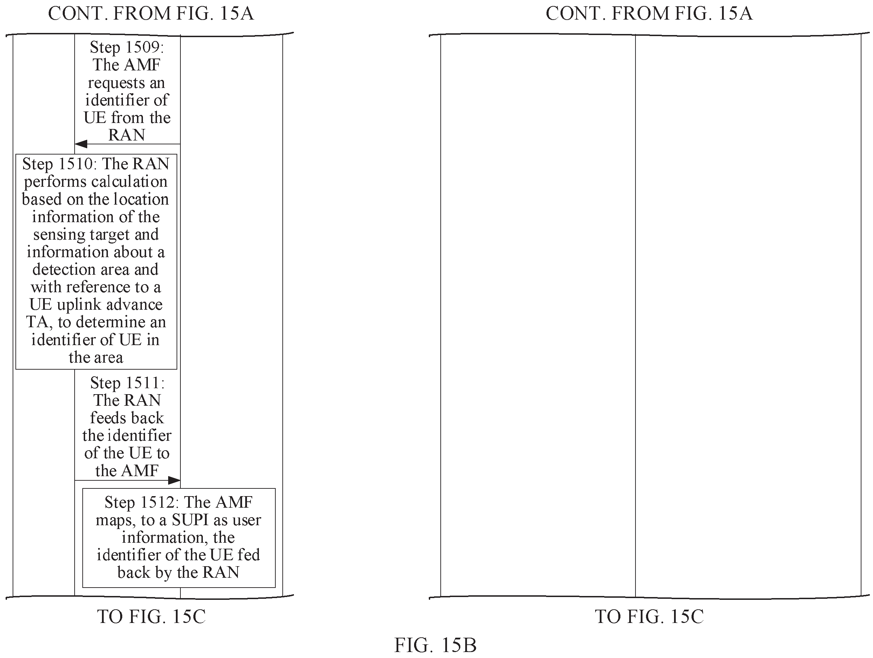

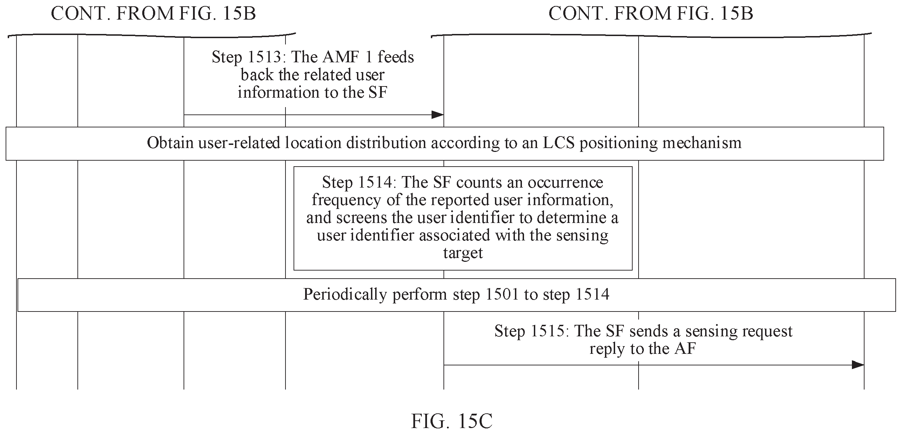

The method may be described with data exchange between an uncrewed aerial vehicle target, a RAN, an AMF, an LMF, an SF, a NEF, and an AF. Because execution operations of different AMFs are the same, only one AMF is used as an example for description herein. Specifically, refer o FIG. 15A to FIG. 15C, and the method is performed as follows:
Step 1501: The AF sends a W1 message to the NEF.
Step 1502: The NEF sends a sensing request message to the SF.
Step 1503: The SF sends a sensing request to the RAN through the AMF.
Step 1504: The RAN performs sensing detection.
Step 1505: Establish a sensing transmission tunnel.
Step 1506: The SF performs data processing on point cloud data reported by the RAN.
Step 1507: The SF sends a UE identifier obtaining request message to the AMF.

For step 1501 to step 1507, refer to step 1201 to step 1207b in FIG. 12 for understanding, and details are not described herein again.

Step 1508: The AMF determines an identifier of the RAN based on location information of a sensing target.

Specifically, the AMF may determine a base station, namely, the RAN, based on a service range of the AMF (namely, the base station to which the AMF may be connected) and a location of the sensing target.

Step 1509: The AMF requests an identifier of UE from the RAN.

Specifically, the location information of the sensing target and information about a detection area may be carried in step 1509 to request the identifier of the UE from the RAN.

Step 1510: The RAN performs calculation based on the location information of the sensing target and the information about the detection area and with reference to a UE uplink advance TA, to determine an identifier of UE in the area.

Specifically, the identifier of the UE in step 1510 includes a temporary identifier RNTI allocated by the base station and an identifier, namely, an NGAP UE ID, for identifying each user over an N2 interface between the base station and the AMF.

Step 1511: The RAN feeds back the identifier of the UE to the AMF.

Specifically, the identifier of the UE fed back by the RAN in step 1511 may be a C-RNTI + an NGAP UE ID.

Step 1512: The AMF maps, to a SUPI or an IMSI, the identifier of the UE fed back by the RAN, and further determines a user context as user information based on the SUPI or the IMSI.

Step 1513: The AMF feeds back the related user information to the SF.

Step 1514: The SF counts an occurrence frequency of the reported user information, and screens the user identifier to determine a user identifier associated with the sensing target.

Step 1515: The SF sends a sensing request reply to the AF.

Specifically, for step 1511 to step 1514, refer to step 1209a to step 1211 in FIG. 12 for understanding, and details are not described herein again.

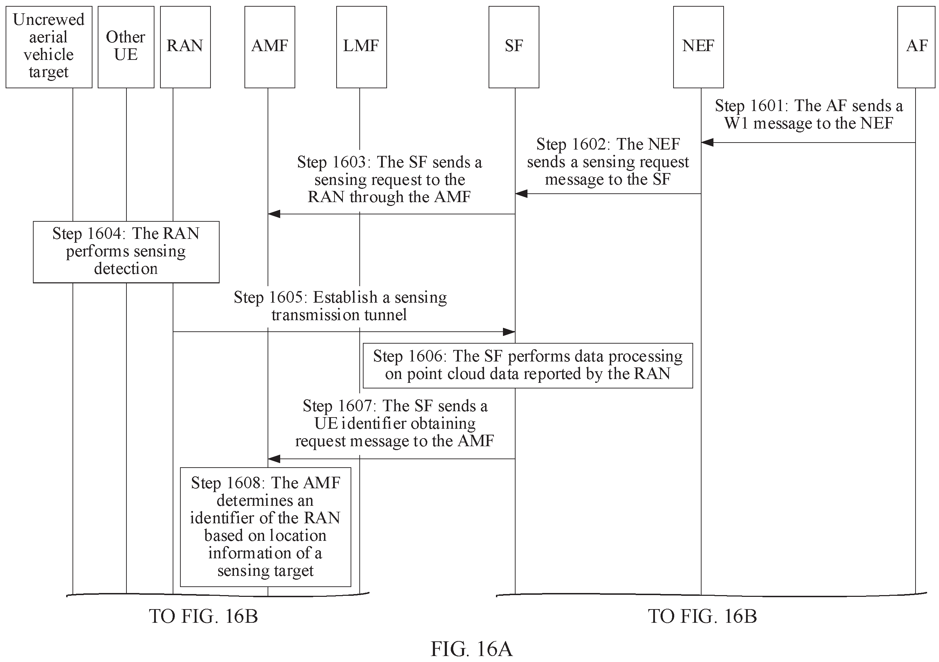

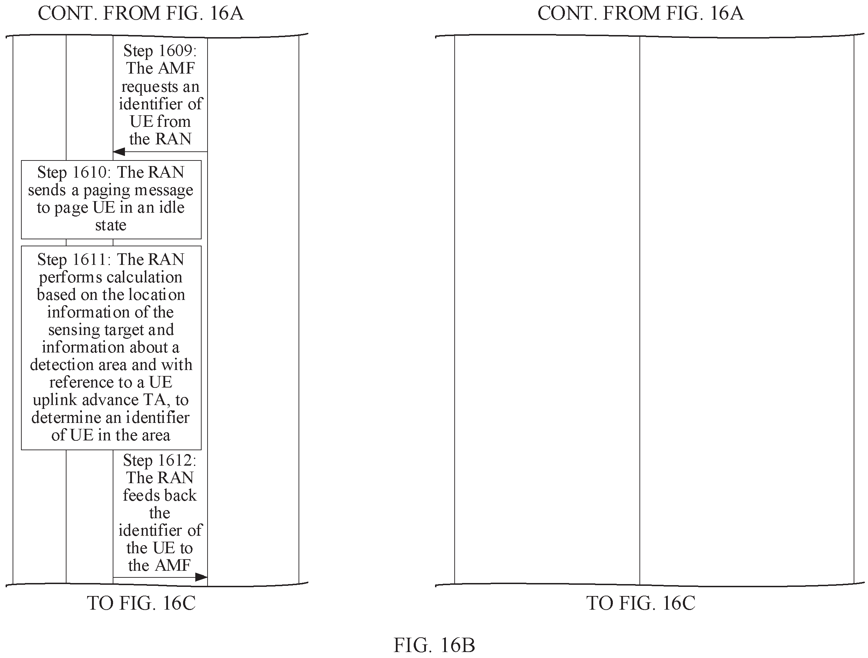

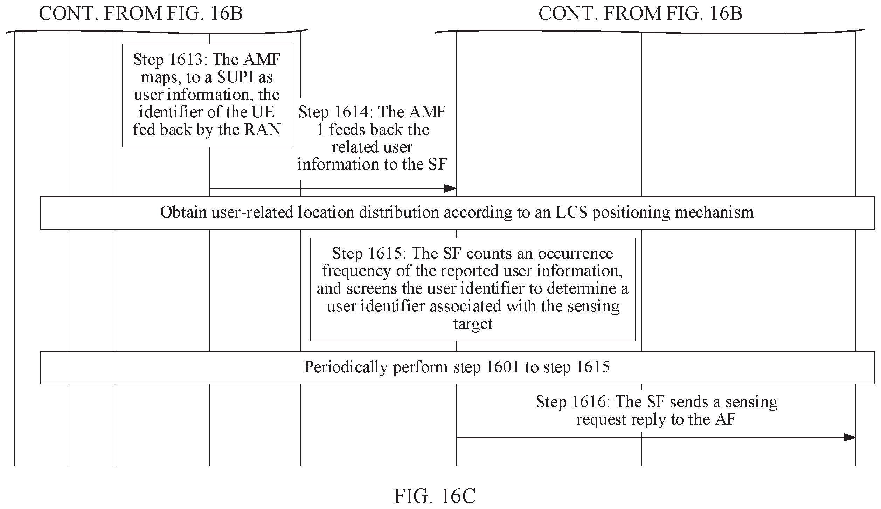

Considering that UE may be in an idle state in an actual application process, to more accurately determine a user associated with a sensing target, a UE paging procedure is added in comparison with the example in FIG. 15A to FIG. 15C. The method may be described with data exchange between an uncrewed aerial vehicle target, other UE, a RAN, an AMF, an LMF, an SF, an NWDAF, and an AF. Refer to FIG. 16A to FIG. 16C, and the method is performed as follows:
Step 1601: The AF sends a W1 message to a NEF.
Step 1602: The NEF sends a sensing request message to the SF.
Step 1603: The SF sends a sensing request to the RAN through the AMF.
Step 1604: The RAN performs sensing detection.
Step 1605: Establish a sensing transmission tunnel.
Step 1606: The SF performs data processing on point cloud data reported by the RAN.
Step 1607: The SF sends a UE identifier obtaining request message to the AMF.

For step 1601 to step 1607, refer to step 1201 to step 1207b in FIG. 12 for understanding, and details are not described herein again.

Step 1608: The AMF determines an identifier of the RAN based on location information of a sensing target.

Specifically, the AMF may determine a base station, namely, the RAN, based on a service range of the AMF (namely, a base station to which the AMF may be connected) and a location of the sensing target.

Step 1609: The AMF requests an identifier of UE from the RAN.

Step 1610: The RAN sends a paging message to page UE in an idle state.

For details, refer to step 1309 for understanding, and the details are not described herein again in this application.

Step 1611: The RAN performs calculation based on the location information of the sensing target and information about a detection area and with reference to a UE uplink advance TA, to determine an identifier of UE in the area.

Step 1612: The RAN feeds back the identifier of the UE to the AMF.

Step 1613: The AMF maps, to a SUPI as user information, the identifier of the UE fed back by the AMF.

Step 1614: The AMF feeds back the related user information to the SF.

Step 1615: The SF counts an occurrence frequency of the reported user information, and screens the user identifier to determine a user identifier associated with the sensing target.

Step 1616: The SF sends a sensing request reply to the AF.

Specifically, for step 1611 to step 1614, refer to step 1209a to step 1211 in FIG. 12 for understanding, and details are not described herein again.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

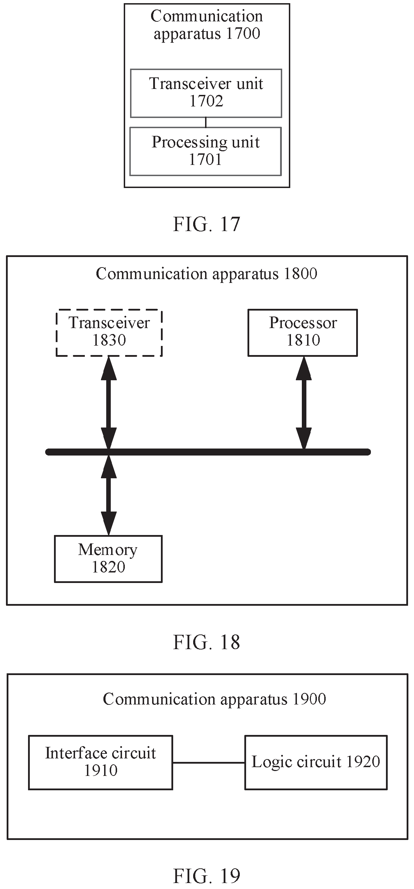

When an integrated unit is used, FIG. 17 is a possible example block diagram of a communication apparatus according to an embodiment of this application. As shown in FIG. 17, the communication apparatus 1700 may include a processing unit 1701 and a transceiver unit 1702. The processing unit 1701 is configured to control and manage an action of the communication apparatus 1700. The transceiver unit 1702 is configured to support communication between the communication apparatus 1700 and another device. Optionally, the transceiver unit 1702 may include a receiving unit and/or a sending unit that are/is respectively configured to perform a receiving operation and a sending operation. Optionally, the communication apparatus 1700 may further include a storage unit, configured to store program code and/or data of the communication apparatus 1700. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the sensing network element, the network data analytics function, the access and mobility management network element, the sensing requester, or the like above.

In an implementation, the communication apparatus may be the sensing network element. The transceiver unit 1702 is configured to obtain sensing information of a user, where the sensing information of the user includes location information of the user. The transceiver unit 1702 is further configured to receive a first message, where the first message is for requesting associated user information of a first target. The processing unit 1701 is configured to obtain sensing data, and obtain sensing information of the first target based on the sensing data, where the sensing information of the first target includes location information of the first target. The transceiver unit 1702 is further configured to send the sensing information of the first target and the sensing information of the user.

It should be noted that "obtains" in "obtains sensing information of the first target based on the sensing data" may be replaced with "determines". In addition, "the sensing network element sends the sensing information of the first target and the sensing information of the user" does not merely mean that the sensing information of the first target and the sensing information of the user are simultaneously sent to a same receiver, but may also mean that the sensing information of the first target and the sensing information of the user are sent to different receivers in different messages. For example, the sensing network element sends the sensing information of the first target to a sensing requester, and sends the sensing information of the user to a network data analytics function or an access and mobility management network element. In addition, the sensing requester may be replaced with an application function (application function, AF), a third party, a sensing third-party, a sensing application, or the like. This is not limited. In addition, for the first message, "is for requesting" may also be understood as "is for subscribing to", "is for obtaining", or the like. This is not specifically limited herein in this application. The "sensing information" may be replaced with a "sensing context", a "user stereoscopic context", a "sensing stereoscopic context", or the like. The sensing information is not specifically limited in this application.

In this application, the sensing network element determines the associated user information of the first target based on the sensing data. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

In an optional manner, the transceiver unit 1702 is configured to send the sensing information of the first target to a sensing requester.

Optionally, the transceiver unit 1702 is configured to send the sensing information of the user to a network data analytics function, or the transceiver unit 1702 is configured to send the sensing information of the user to an access and mobility management network element.

In an optional manner, the transceiver unit 1702 is configured to: receive a second message from the sensing requester, where the second message is for requesting the location information of the first target, or is for obtaining a notification for the first target; and send a response message for the second message to the sensing requester.

In an optional manner, the transceiver unit 1702 is configured to: receive a third message from the access and mobility management network element, where the third message is for triggering the sensing network element to obtain sensing information of a first user, and the third message includes an identifier of the first user and a first area of the first user; obtain the sensing information of the first user; and send the sensing information of the first user to the network data analytics function.

It should be noted that, "the third message includes an identifier of the first user and a first area of the first user" may be understood as: The third message includes only the identifier of the first user or includes only the first area of the first user; or the third message includes both the identifier of the first user and the first area of the first user.

The triggering in this application may be understood as requesting/indicating/notifying/triggering, and the obtaining the sensing information of the first user in this application may be replaced with generating/producing/determining/establishing/creating the sensing information of the first user.

It should be noted that the first area in this specification may include a cell identity (cell ID), a base station/access network identity, a tracking area identity/tracking area code (TAI/TAC), a public land mobile network identity (PLMN ID), a service area identity (service area ID, SAI), a central unit identity (central unit ID, CU ID), a distributed unit identity (Distributed Unit ID, DU ID), a transmission reception point identity (Transmission Reception ID, TRP ID), or the like. This is merely an example for description herein, and is not specifically limited in this application.

In an optional manner, the transceiver unit 1702 is configured to receive a fourth message from the access and mobility management network element, where the fourth message is for requesting to obtain sensing information of a user in a first area, and the fourth message includes the first area in which a first user is located. The transceiver unit 1702 is configured to obtain the sensing information of the user in the first area. The transceiver unit 1702 is configured to send the sensing information of the user in the first area to the access and mobility management network element.

In an optional manner, the sensing information of the user further includes one or more of the following: an appearance of the user, a gait of the user, a contour of the user, a speed of the user, a distance of the user, an angle of the user, a direction of the user, time of the user, sensing information of an object associated with the user, and biological information of the user.

It should be noted that the contour of the user/a form of the user may be understood as recognition information or appearance recognition information of the user, or appearance information of the user, and is an expression form of long-distance biological information. The sensing information of the object associated with the user may be understood as the sensing information of an object related to the user, a target or target object related to the user, an object corresponding to the user, or a target or target object corresponding to the user, and may also be interpreted as sensing information of a target or target object that is taken/carried/held/remotely controlled by the user or that is away from the user for a specific range. The biological information of the user may include facial recognition information of the user, a fingerprint of the user, a skin color of the user, or the like. Gait information of the user may be understood as a walking posture of the user. Gait recognition is to perform analysis processing on an image sequence including human body motions, where the analysis processing generally includes three processes, namely, gait detection, gait representation, and the gait recognition, and the like.

In an optional manner, the sensing information of the first target further includes one or more of the following: an appearance of the first target, a detection area associated with the first target, trajectory information of the first target, and time information of the first target.

It should be noted that the appearance of the first target may be appearance recognition information of the first target. For example, the first target is an uncrewed aerial vehicle, a vehicle, a flying bird, or a stone. The trajectory information of the first target may be understood as the location information of the first target. For example, the trajectory information includes a string of location information. The time information of the first target may be understood as information about a moment at which the first target appears or information about a moment at which the first target is detected.

In an optional manner, the transceiver unit 1702 is configured to send a fifth message, where the fifth message is for requesting to obtain the associated user information of the first target, and the fifth message includes one or more of the following: a detection area related to the first target, an identifier of the first target, moving trajectory information of the first target, and the location information of the first target. The transceiver unit 1702 is configured to receive a response message for the fifth message, where the response message for the fifth message includes the associated user information of the first target.

It should be noted that the associated user information of the first target may be interpreted as user information corresponding to the first target/user information related to the first target, and may indicate that these users are highly possibly users, responsible persons, or persons in charge of the target. The detection area related to the first target may be interpreted as an area including a location of the first target, for example, an area centered on the location of the first target or an area including the location of the first target. The area may be an area represented by a geographic coordinate, or may be an area represented by a cell identity, a base station identity, a tracking area identity, and/or a PLMN identity.

In an optional manner, the processing unit 1701 is configured to determine the associated user information of the first target.

In an optional manner, the processing unit 1701 is configured to: determine a quantity of occurrences of a user in the detection area; and delete, from a user associated with the first target, a user whose quantity of occurrences is less than or equal to a first parameter, to obtain a second user.

In an implementation, the communication apparatus may be the network data analytics function. The transceiver unit 1702 is configured to receive sensing information of a first target from a sensing network element, where the sensing information of the first target includes location information of the first target. The processing unit 1701 is configured to determine associated user information of the first target based on the sensing information of the first target, where the associated user information of the first target includes location information of a user and an identifier of the user.

It should be noted that "determine" may be replaced with "produce/generate/obtain". In this application, the network data analytics function analyzes the sensing information of the first target to determine the associated user information of the first target. In this manner, a person in charge of the first target can be traced, and supervision complexity and costs are reduced, so that this application can be better applied to social life and practice. For example, a target person in charge can be found for an unauthorized uncrewed aerial vehicle, an autonomous vehicle with an abnormal trajectory, or a stone placed on a railway or a highway.

In an optional manner, the transceiver unit 1702 is further configured to: receive a first message from a sensing requester, where the first message is for requesting the associated user information of the first target; request to obtain sensing information of a user from the sensing network element, where the sensing information of the user includes the associated user information of the first target; and send the associated user information of the first target to the sensing requester.

It should be noted that "requesting" may be replaced with "subscribing to/obtaining". The network data analytics function obtains the associated user information of the first target based on the request sent by the sensing requester, to assist the sensing requester (for example, a regulatory authority) in reducing supervision costs, and avoid resource overheads caused by the AF through large-scale screening of users associated with the first target.

In an optional manner, the transceiver unit 1702 is configured to receive a second message from the sensing requester, where the second message is for requesting the location information of the first target, or is for obtaining a notification for the first target. The transceiver unit 1702 is configured to request to obtain the location information of the first target or the notification for the first target from the sensing network element. The transceiver unit 1702 is configured to send the location information of the first target or the notification for the first target to the sensing requester.

The request for the location information of the first target or the obtaining of the notification for the first target from the network data analytics function is triggered based on the request of the sensing requester, to give a timely alarm for an abnormal target, to avoid a public resource loss or privacy leakage caused when the abnormal target enters an area.

In an optional manner, the sensing information of the first target further includes one or more of the following: an appearance of the first target, a detection area associated with the first target, trajectory information of the first target, and time information of the first target.

In an optional manner, the sensing information of the user further includes one or more of the following: an appearance of the user, a gait of the user, a speed of the user, a contour of the user, a distance of the user, an angle of the user, a direction of the user, time of the user, sensing information of an object associated with the user, and biological information of the user.

In an optional manner, the transceiver unit 1702 is configured to send a third message to the sensing network element, where the third message is for obtaining the sensing information of the user.

In an optional manner, the transceiver unit 1702 is configured to send a fourth message to an access and mobility management network element, where the fourth message is for obtaining the sensing information of the user. The transceiver unit 1702 is configured to receive the sensing information of the user from the access and mobility management network element.

In an optional manner, the processing unit 1701 is configured to determine the associated user information of the first target based on the sensing information of the user and the sensing information of the first target, where the sensing information of the first target includes one or more of the following: the location information of the first target, the appearance of the first target, and time of the first target.

In an optional manner, the processing unit 1701 is configured to determine an area in which a first target is located. The processing unit 1701 is configured to determine, based on the location information of the user, a first user located in the area in which the first target is located.

In an optional manner, the processing unit 1701 is configured to determine the associated user information of the first target based on the sensing information of the first target and sensing information of the first user.

In an optional manner, the processing unit 1701 is configured to obtain the associated user information of the first target locally and/or non-locally.

It should be noted that "locally" may mean local storage or configuration by the NWDAF, and "non-locally" may mean obtaining by the NWDAF from another network element. For example, a user identifier corresponding to the first target is obtained from an NWDAF of another PLMN.

In an optional manner, the processing unit 1701 is configured to: determine a quantity of occurrences of a user in the detection area; and delete, from a user associated with the first target, a user whose quantity of occurrences is less than or equal to a first parameter, to obtain a second user.

In an embodiment, the communication apparatus may be the access and mobility management network element. The transceiver unit 1702 is configured to receive a registration request message of a user. The transceiver unit 1702 is configured to send a first message to the sensing network element, where the first message is for triggering the sensing network element to obtain sensing information of a first user, and the first message includes an identifier of the first user and a first area of the first user.

It should be noted that the access and mobility management network element may send the first message after receiving the request message of the user, or may send the first message after receiving a registration accept message. This is not specifically limited herein in this application. That the first message includes the identifier of the first user and the first area of the first user may be: The first message includes only the identifier of the first user, the first message includes only the first area of the first user, or the first message includes both the identifier of the first user and the first area of the first user.

In an optional manner, the transceiver unit 1702 is configured to send a second message to the sensing network element, where the second message is for requesting to obtain sensing information of a user in the first area, and the second message includes the first area in which the first user is located. The transceiver unit 1702 is configured to receive the sensing information of the user in the first area from the sensing network element.

In an optional manner, the transceiver unit 1702 is configured to receive a third message from a network data analytics function, where the third message is for obtaining sensing information of a user. The transceiver unit 1702 is configured to send the sensing information of the user to the network data analytics function.

In an optional manner, the sensing information of the user includes one or more of the following: location information of the user, a form of the user, a gait of the user, a contour of the user, a speed of the user, a distance of the user, an angle of the user, a direction of the user, time of the user, sensing information of an object associated with the user, and biological information of the user.

In an optional manner, the transceiver unit 1702 is configured to receive a fourth message from the sensing network element, where the fourth message is for requesting to obtain associated user information of a first target, and the fourth message includes one or more of the following: a detection area related to the first target, an identifier of the first target, moving trajectory information of the first target, and location information of the first target. The access and mobility management network element determines the associated user information of the first target. The transceiver unit 1702 is configured to send the associated user information of the first target to the sensing network element.

In an optional manner, the transceiver unit 1702 is configured to receive a fifth message from the sensing network element, where the fifth message is for requesting to obtain associated user information of a first target, and the fifth message includes a detection area of the first target. The processing unit 1701 is configured to determine, based on the detection area of the first target, a first access network device located in the detection area.

In an optional manner, the transceiver unit 1702 is configured to send a sixth message to the first access network device, where the sixth message is for requesting an identifier of a first user in the detection area. The transceiver unit 1702 is configured to receive the identifier of the first user from the first access network device. The access and mobility management network element determines information about the first user based on the logical identifier of the first user.

In an embodiment, the communication apparatus may be the sensing requester. The transceiver unit 1702 is configured to send a first message, where the first message is for requesting associated user information of a first target, or the first message is for requesting a notification for a first target.

In an embodiment, the communication apparatus may be the sensing network element. The transceiver unit 1702 is configured to receive a first message from an access and mobility management network element, where the first message is for triggering the sensing network element to obtain sensing information of a first user, and the first message includes an identifier of the first user and a first area of the first user. The transceiver unit 1702 is configured to obtain the sensing information of the first user. The transceiver unit 1702 is configured to send the sensing information of the first user to a network data analytics function.

In an embodiment, the communication apparatus may be the sensing network element. The transceiver unit 1702 is configured to receive a first message from an access and mobility management network element, where the first message is for requesting to obtain sensing information of a user in a first area, and the first message includes the first area in which a first user is located. The transceiver unit 1702 is configured to obtain sensing information of a user in the first area. The transceiver unit 1702 is configured to send the sensing information of the user in the first area to the access and mobility management network element.

FIG. 18 shows a communication apparatus 1800 further provided in this application. The communication apparatus 1800 may be a chip or a chip system. The communication apparatus may be located in a device, for example, an access network device or a first core network device, in any one of the foregoing method embodiments, to perform an action corresponding to the device.

Optionally, the chip system may include a chip, or may include a chip and another discrete component.

The communication apparatus 1800 includes a processor 1810.

The processor 1810 is configured to execute a computer program stored in a memory 1820, to implement an action of each device in any one of the foregoing method embodiments.

The communication apparatus 1800 may further include the memory 1820, configured to store the computer program.

Optionally, the memory 1820 is coupled to the processor 1810. The coupling is an indirect coupling or a communication connection between apparatuses, units, or modules, may be in an electrical form, a mechanical from, or another form, and is for information exchange between the apparatuses, the units, or the modules. Optionally, the memory 1820 and the processor 1810 are integrated together.

There may be one or more processors 1810 and one or more memories 1820. This is not limited.

Optionally, during actual application, the communication apparatus 1800 may include or may not include a transceiver 1830. A dashed box is used as an example in the figure. The communication apparatus 1800 may exchange information with another device through the transceiver 1830. The transceiver 1830 may be a circuit, a bus, a transceiver, or any other apparatus that may be configured to exchange information.

In a possible implementation, the communication apparatus 1800 may be an access network device or a first core network device in the foregoing method embodiments.

In this embodiment of this application, a specific connection medium between the transceiver 1830, the processor 1810, and the memory 1820 is not limited. In this embodiment of this application, the memory 1820, the processor 1810, and the transceiver 1830 are connected by using a bus in FIG. 18. The bus is represented by using a bold line in FIG. 18. A connection manner between other components is merely an example for description, and is not limited by reference. The bus may be classified into an address bus, a data bus, a control bus, and the like. For ease of representation, only one bold line is used to represent the bus in FIG. 18, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 19. An embodiment of this application further provides another communication apparatus 1900, including an interface circuit 1910 and a logic circuit 1920. The interface circuit 1910 may be understood as an input/output interface, and may be configured to perform sending and receiving steps of each device in any one of the foregoing method embodiments. The logic circuit 1920 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments, for example, the method performed by the NWDAF or the SF in the embodiment shown in FIG. 4, is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes the sensing network element, the network data analytics function, and the access and mobility management network element in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing apparatus to generate a machine, so that the instructions executed by the computer or the processor of the another programmable data processing apparatus generate an apparatus for implementing a specific function in one or more procedures in the flowcharts and/or in one or more blocks in the block diagrams.

These computer program instructions may alternatively be stored in a computer-readable memory that can indicate the computer or the another programmable data processing apparatus to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto the computer or the another programmable data processing apparatus, so that a series of operation steps are performed on the computer or the another programmable apparatus to generate computer-implemented processing. Therefore, the instructions executed on the computer or the another programmable apparatus provide steps for implementing a specific function in one or more procedures in the flowcharts and/or in one or more blocks in the block diagrams.

## Claims

1. A communication method, comprising:
obtaining, by a sensing network element, sensing information of a user, wherein the sensing information of the user comprises location information of the user;
receiving, by the sensing network element, a first message, wherein the first message is for requesting associated user information of the first target;
obtaining, by the sensing network element, sensing data, and obtaining sensing information of the first target based on the sensing data, wherein the sensing information of the first target comprises location information of the first target; and
sending, by the sensing network element, the sensing information of the first target and the sensing information of the user.

2. The method according to claim 1, wherein the sending, by the sensing network element, the sensing information of the first target and the sensing information of the user comprises:
sending, by the sensing network element, the sensing information of the first target to a sensing requester.

3. The method according to claim 1, wherein the sending, by the sensing network element, the sensing information of the first target and the sensing information of the user comprises:
sending, by the sensing network element, the sensing information of the user to a network data analytics function; or
sending, by the sensing network element, the sensing information of the user to an access and mobility management network element.

4. The method according to any one of claims 1 to 3, wherein the method further comprises:
receiving, by the sensing network element, a second message from a sensing requester, wherein the second message is for requesting the location information of the first target, or is for obtaining a notification for the first target; and
sending, by the sensing network element, a response message for the second message to the sensing requester.

5. The method according to claim 3, wherein the method further comprises:
receiving, by the sensing network element, a third message from the access and mobility management network element, wherein the third message is for triggering the sensing network element to obtain sensing information of a first user, and the third message comprises an identifier of the first user and a first area of the first user; and
obtaining, by the sensing network element, the sensing information of the first user; and
the sending, by the sensing network element, the sensing information of the user to the network data analytics function comprises:
sending, by the sensing network element, the sensing information of the first user to the network data analytics function.

6. The method according to claim 3, wherein the method further comprises:
receiving, by the sensing network element, a fourth message from the access and mobility management network element, wherein the fourth message is for requesting to obtain sensing information of a user in a first area, and the fourth message comprises the first area in which a first user is located; and
obtaining, by the sensing network element, the sensing information of the user in the first area; and
the sending, by the sensing network element, the sensing information of the user to the access and mobility management network element comprises:
sending, by the sensing network element, the sensing information of the user in the first area to the access and mobility management network element.

7. The method according to any one of claims 1 to 6, wherein the sensing information of the user further comprises one or more of the following: an appearance of the user, a gait of the user, a speed of the user, a contour of the user, a distance of the user, an angle of the user, a direction of the user, time of the user, sensing information of an object associated with the user, and biological information of the user.

8. The method according to any one of claims 1 to 7, wherein the sensing information of the first target further comprises one or more of the following:
an appearance of the first target, a detection area associated with the first target, moving trajectory information of the first target, and time information of the first target.

9. The method according to any one of claims 1 to 3 or claim 5, wherein the method further comprises:
sending, by the sensing network element, a fifth message, wherein the fifth message is for requesting to obtain the associated user information of the first target, and the fifth message comprises one or more of the following: a detection area related to the first target, an identifier of the first target, trajectory information of the first target, and the location information of the first target; and
receiving, by the sensing network element, a response message for the fifth message, wherein the response message for the fifth message comprises the associated user information of the first target.

10. The method according to claim 9, wherein the method further comprises:
determining, by the sensing network element, the associated user information of the first target.

11. The method according to claim 10, wherein the determining, by the sensing network element, the associated user information of the first target comprises:
determining, by the sensing network element, a quantity of occurrences of a user in the detection area; and
deleting, by the sensing network element from a user associated with the first target, a user whose quantity of occurrences is less than or equal to a first parameter, to obtain a second user.

12. A communication method, comprising:
receiving, by a network data analytics function, sensing information of a first target from a sensing network element, wherein the sensing information of the first target comprises location information of the first target; and
determining, by the network data analytics function, associated user information of the first target based on the sensing information of the first target, wherein the associated user information of the first target comprises location information of a user and an identifier of the user.

13. The method according to claim 12, wherein the method further comprises:
receiving, by the network data analytics function, a first message from a sensing requester, wherein the first message is for requesting the associated user information of the first target;
requesting, by the network data analytics function, to obtain sensing information of the user from the sensing network element, wherein the sensing information of the user comprises the associated user information of the first target; and
sending, by the network data analytics function, the associated user information of the first target to the sensing requester.

14. The method according to claim 12, wherein the method further comprises:
receiving, by the network data analytics function, a second message from a sensing requester, wherein the second message is for requesting the location information of the first target, or is for obtaining a notification for the first target;
requesting, by the network data analytics function, to obtain the location information of the first target or the notification for the first target from the sensing network element; and
sending, by the network data analytics function, the location information of the first target or the notification for the first target to the sensing requester.

15. The method according to any one of claims 12 to 14, wherein the sensing information of the first target further comprises one or more of the following: an appearance of the first target, a detection area associated with the first target, trajectory information of the first target, and time information of the first target.

16. The method according to any one of claims 12 to 15, wherein the method further comprises:
sending, by the network data analytics function, a third message to the sensing network element, wherein the third message is for obtaining the sensing information of the user.

17. The method according to any one of claims 12 to 15, wherein the method further comprises:
sending, by the network data analytics function, a fourth message to an access and mobility management network element, wherein the fourth message is for obtaining the sensing information of the user; and
receiving, by the network data analytics function, the sensing information of the user from the access and mobility management network element.

18. The method according to claim 16 or 17, wherein the sensing information of the user comprises one or more of the following: an appearance of the user, a gait of the user, a contour of the user, a speed of the user, a distance of the user, an angle of the user, a direction of the user, time of the user, sensing information of an object associated with the user, and biological information of the user.

19. The method according to claim 18, wherein the determining the associated user information of the first target based on the sensing information of the first target comprises:
determining, by the network data analytics function, the associated user information of the first target based on the sensing information of the user and the sensing information of the first target, wherein the sensing information of the first target comprises one or more of the following: the location information of the first target, the appearance of the first target, and time of the first target.

20. The method according to any one of claims 12 to 19, wherein the method further comprises:
determining, by the network data analytics function, an area in which the first target is located; and
determining, by the network data analytics function based on the location information of the user, a first user located in the area in which the first target is located.

21. The method according to claim 20, wherein the method further comprises:
determining, by the network data analytics function, the associated user information of the first target based on the sensing information of the first target and sensing information of the first user.

22. The method according to claim 21, wherein the determining, by the network data analytics function, the associated user information of the first target comprises:
obtaining, by the network data analytics function, the associated user information of the first target locally and/or non-locally.

23. The method according to claim 21 or 22, wherein the determining the associated user information of the first target comprises:
determining, by the network data analytics function, a quantity of occurrences of a user in the detection area; and
deleting, by the network data analytics function from a user associated with the first target, a user whose quantity of occurrences is less than or equal to a first parameter, to obtain a second user.

24. A communication method, comprising:
receiving, by an access and mobility management network element, a registration request message of a user; and
sending, by the access and mobility management network element, a first message to a sensing network element, wherein the first message is for triggering the sensing network element to obtain sensing information of a first user, and the first message comprises an identifier of the first user and a first area of the first user.

25. The method according to claim 24, wherein the method further comprises:
sending, by the access and mobility management network element, a second message to the sensing network element, wherein the second message is for requesting to obtain sensing information of a user in the first area, and the second message comprises the first area in which the first user is located; and
receiving, by the access and mobility management network element, the sensing information of the user in the first area from the sensing network element.

26. The method according to claim 25, wherein the method further comprises:
receiving, by the access and mobility management network element, a third message from a network data analytics function, wherein the third message is for obtaining sensing information of the user; and
sending, by the access and mobility management network element, the sensing information of the user to the network data analytics function.

27. The method according to any one of claims 24 to 26, wherein the sensing information of the user comprises one or more of the following: location information of the user, an appearance of the user, a contour of the user, a form of the user, a gait of the user, the contour of the user, a speed of the user, a distance of the user, an angle of the user, a direction of the user, time of the user, sensing information of an object associated with the user, and biological information of the user.

28. The method according to claim 25, wherein the method further comprises:
receiving, by the access and mobility management network element, a fourth message from the sensing network element, wherein the fourth message is for requesting to obtain associated user information of a first target, and the fourth message comprises one or more of the following: a detection area related to the first target, an identifier of the first target, trajectory information of the first target, and location information of the first target;
determining, by the access and mobility management network element, the associated user information of the first target; and
sending, by the access and mobility management network element, the associated user information of the first target to the sensing network element.

29. A communication apparatus, comprising a functional module for implementing the method according to any one of claims 1 to 28.

30. A communication apparatus, comprising at least one processor and a memory, wherein
the memory is configured to store a computer program or instructions; and
the at least one processor is configured to execute the computer program or the instructions, to perform the method according to any one of claims 1 to 28.

31. A chip system, wherein the chip system comprises a processing circuit, and the processing circuit is coupled to a storage medium; and
the processing circuit is configured to: execute a part or all of a computer program or instructions in the storage medium, and implement the method according to any one of claims 1 to 28 when the part or all of the computer program or the instructions are executed.

32. A computer-readable storage medium, wherein the computer-readable storage medium stores instructions; and when the instructions are executed by a computer, the method according to any one of claims 1 to 28 is performed.

33. A computer program product comprising a computer program or instructions, wherein when the computer program product runs on a computer, the method according to any one of claims 1 to 28 is performed.
